(19) Europäisches Patentamt
European Patent Office
Office européen des brevets

(11) **EP 2 938 651 B1**

(12) **EUROPÄISCHE PATENTSCHRIFT**

(45) Veröffentlichungstag und Bekanntmachung des Hinweises auf die Patenterteilung:
**21.03.2018 Patentblatt 2018/12**

(21) Anmeldenummer: **13808009.8**

(22) Anmeldetag: **17.12.2013**

(51) Int Cl.:
*C08G 6/00* (2006.01)          *C08F 16/12* (2006.01)
*C08G 4/00* (2006.01)          *C08L 61/00* (2006.01)

(86) Internationale Anmeldenummer:
**PCT/EP2013/076899**

(87) Internationale Veröffentlichungsnummer:
**WO 2014/095861 (26.06.2014 Gazette 2014/26)**

(54) **VERFAHREN ZUR HERSTELLUNG VON FORMALDEHYD/CO2-COPOLYMEREN**

METHOD FOR PRODUCING FORMALDEHYDE/CO2 COPOLYMERS

PROCÉDÉ DE PRODUCTION DE COPOLYMÈRES FORMALDÉHYDE/CO2

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2012 EP 12199047**

(43) Veröffentlichungstag der Anmeldung:
**04.11.2015 Patentblatt 2015/45**

(73) Patentinhaber: **Covestro Deutschland AG**
**51373 Leverkusen (DE)**

(72) Erfinder:
• **MÜLLER, Thomas Ernst**
**52062 Aachen (DE)**
• **GÜRTLER, Christoph**
**50735 Köln (DE)**
• **VOGT, Henning**
**52066 Aachen (DE)**
• **KRAUTSCHICK, Mario**
**41836 Hückelhoven (DE)**
• **LEITNER, Walter**
**52074 Aachen (DE)**

(74) Vertreter: **Levpat**
**c/o Covestro AG**
**Gebäude 4825**
**51365 Leverkusen (DE)**

(56) Entgegenhaltungen:
**WO-A1-96/06118**

• **RAMESH K SHARMA ET AL: "Copolymerization reactions of carbon dioxide, Preprints of Papers", PREPRINTS OF PAPERS PRESENTED - AMERICAN CHEMICAL SOCIETY.DIVISION OF FUEL CHEMISTRY, WASHINGTON, DC, US, Bd. 45, Nr. 4, 1. Januar 2000 (2000-01-01) , Seiten 676-680, XP003030956, ISSN: 0569-3772**

**EP 2 938 651 B1**

**Beschreibung**

Die vorliegende Erfindung beschreibt ein Verfahren zur Herstellung von nicht-alternierenden Formaldehyd/CO2-Copolymeren.

Nicht-alternierende Formaldehyd/$CO_2$-Copolymere sind interessant als Einsatzstoffe im Polyurethanbereich, sowie für Anwendungen im Polyoxymethylen (POM)-Sektor. Durch Veränderung des $CO_2$-Gehaltes können die physikalischen Eigenschaften auf die jeweilige Anwendung angepasst werden, wodurch neue Anwendungsgebiete für Polymere erschlossen werden können. Aufgrund ihres $CO_2$-Fixierungspotenzials weisen sie im Vergleich zu existierenden Produkten (zum Beispiel Polyether im Polyurethanbereich beziehungsweise hochmolekularen Homopolymeren von Formaldehyd im POM-Sektor) eine günstigere $CO_2$-Bilanz auf.

WO 96/06118 beschreibt die kationische Polymerisation von Monomeren in flüssigem, gasförmigem oder überkritischem Kohlendioxid, wobei auch Formaldehyd als Monomer verwendet werden kann. Es werden kationische Polymerisationskatalysatoren verwendet. Der Einbau von Kohlendioxid unter Bildung von Formaldehyd/$CO_2$-Copolymeren ist allerdings nicht offenbart.

Die Herstellung von alternierenden Formaldehyd/$CO_2$-Copolymeren aus wässriger Formaldehyd-Lösung unter Verwendung von Trockeneis als $CO_2$-Quelle und Einsatz von tertiären Aminen als Polymerisationskatalysator wurde von Chiang in Tatung Xuebao (1978), 8, 255-265 beschrieben. In den erhaltenen Produkten liegen Formaldehyd- und $CO_2$-Einheiten in einem äquimolaren Verhältnis vor.

Sharma und Olson beschreiben die Herstellung von alternierenden Formaldehyd/$CO_2$-Copolymeren ausgehend sowohl von wässriger Formaldehyd-Lösung als auch von Paraformaldehyd unter Verwendung von Trockeneis als $CO_2$-Quelle (Preprints of Symposia - American Chemical Society (2000), 45-4, 676). Als Katalysatoren kamen ebenfalls tertiäre Amine zum Einsatz. Außerdem wurden Zink-Bisanil-Katalysatoren eingesetzt. In den erhaltenen Produkten liegen Formaldehyd- und $CO_2$- Einheiten in einem äquimolaren Verhältnis vor.

Ein Herstellverfahren für nicht-alternierende Formaldehyd/$CO_2$-Copolymere ist im Stand der Technik nicht offenbart.

Die Aufgabe der vorliegenden Erfindung bestand darin, nicht-alternierende Formaldehyd/$CO_2$-Copolymere sowie ein Verfahren zu ihrer Herstellung bereitzustellen.

Überraschend wurde nun gefunden, dass der Einsatz einer geeignet gewählten Kombination eines Lewis-sauren Katalysators und eines basischen Katalysators bei der Copolymerisation von Formaldehyd und $CO_2$ zu nicht-alternierenden Formaldehyd/$CO_2$-Copolymeren führt.

Gegenstand der Erfindung ist daher ein Verfahren zur Herstellung von nicht-alternierenden Formaldehyd/$CO_2$-Copolymeren, umfassend den Schritt der Reaktion von Formaldehyd oder einer Formaldehyd freisetzenden Verbindung mit Kohlendioxid in Gegenwart eines Katalysatorsystems, wobei das Katalysatorsystem eine Lewis-saure Komponente und eine basische Komponente umfasst, die Lewis-saure Komponente unter Reaktionsbedingungen zumindest zeitweise koordinativ ungesättigt ist und die basische Komponente einen $pK_b$-Wert von $\geq 0$ aufweist.

Unter dem Begriff "alternierend" im Sinne der vorliegenden Erfindung ist zu verstehen, dass innerhalb der Polymerkette jede $CO_2$-Einheit mit zwei Formaldehyd-Einheiten und jede Formaldehyd-Einheit mit zwei $CO_2$-Einheiten verknüpft ist. In den Endgruppen der Polymerkette können bei alternierenden Polymeren weiterhin Einheiten auftreten, in denen eine $CO_2$-Einheit mit einer Formaldehyd-Einheit sowie einer Endgruppe und/oder eine Formaldehyd-Einheit mit einer $CO_2$-Einheit sowie einer Endgruppe verknüpft ist.

Nicht-alternierende Formaldehyd/$CO_2$-Copolymere im Sinne der vorliegenden Erfindung sind somit Copolymere, in denen zwei oder mehr Formaldehyd-Einheiten über Carbonat-Einheiten verknüpft sind. Nicht-alternierende Formaldehyd/$CO_2$-Copolymere im Sinne der Erfindung können alternierende Formaldehyd/$CO_2$-Sequenzen enthalten, enthalten aber in der Polymerkette mindestens eine nicht-alternierende Sequenz, in der mehrere Formaldehyd-Einheiten direkt miteinander verknüpft sind, wobei das relative Verhältnis von Formaldehyd- zu $CO_2$-Einheiten > 1:1, vorzugsweise > 1,5 : 1 ist.

Die Lewis-saure Komponente (im folgenden auch "Polymerisations-Katalysator" genannt) zeichnet sich dadurch aus, dass sie mindestens ein unter Reaktionsbedingungen zumindest zeitweise koordinativ ungesättigtes Metallatom enthält. In der Regel erfolgt die Auswahl danach, ob die Lewis-saure Komponente sich zur Homopolymerisation von Formaldehyd eignet. Folglich kann die Lewis-saure Komponente ein freies oder ein komplexiertes Metallion sein.

Solche Polymerisations-Katalysatoren enthalten als Lewis-saures Zentrum ein oder mehrere koordinativ ungesättigte Metallatome, wie zum Beispiel Bor, Aluminium, Metalle der dritten und vierten Nebengruppe sowie Metalle der Reihe der Lanthanoide, Vanadium, Molybdän, Wolfram, Metalle der achten bis zehnten Nebengruppe, insbesondere Eisen, Kobalt, Nickel, Rhodium, Iridium, Palladium, Platin, Kupfer, Zink, Zinn und Bismut. An das koordinativ ungesättigte Lewis-saure Zentrum können nukleophile Bindungspartner binden.

Das koordinativ ungesättigte Lewis-saure Zentrum kann bereits in der als Katalysator eingesetzten Verbindung vorhanden sein oder bildet sich in der Reaktionsmischung, zum Beispiel durch Abspaltung eines schwach gebundenen nukleophilen Bindungspartners, der nach Abspaltung aus dem Polymerisations-Katalysator eine stabile elektronisch neutrale oder negativ geladene Verbindung ausbilden kann. Beispiele für schwach gebundene nukleophile Bindungspartner, die nach Abspaltung aus dem Polymerisations-Katalysator eine stabile elektronisch neutrale oder negative geladene Verbindung ausbilden können, sind Halogenide wie zum Beispiel Fluorid, Chlorid, Bromid oder Iodid, Cyanid, Cyanat, Isocyanat, Azid, Kohlenmonoxid, Kohlendioxid, Stickstoff, oder organische Verbindungen, die entweder Stickstoff-, Sauerstoff-, Phosphor- oder Schwefel-Atome und/oder isolierte oder konjugierte Doppelbindungssysteme enthalten, mit denen sie Bindungen zum Metallatom ausbilden können. Beispiele hierfür sind organische Nitrile wie zum Beispiel Acetonitril, Ether wie zum Beispiel Tetrahydrofuran oder Diethylether, Thioether wie zum Beispiel Dimethylsulfid, Alkene wie zum Beispiel Ethen, Cyclooctaen oder Cyclooctadien, lineare oder verzweigte gesättigte oder ein- oder mehrfach ungesättigte C1- bis C20-Alkoholate, lineare oder verzweigte gesättigte oder ein- oder mehrfach ungesättigte C1- bis C20-Carboxylate, lineare oder verzweigte gesättigte oder ein- oder mehrfach ungesättigte C1- bis C20-Sulfonate, primäre, sekundäre oder teriäre C1- bis C20-Amine, N-Alkyl- oder N-Arylalkylidenamine, N-Alkyl- oder N-Arylbenzylidenamine, Trialkylphosphine, Triarylphosphine oder gemischte Alkylarylphosphine, Trialkylphosphite, Triarylphosphite oder gemischte Alkylarylphosphite, Trialkylphosphinoxide, Triarylphosphinoxide oder gemischte Alkylarylphosphinoxide, unsubstituierte oder ein- oder mehrfach substituierte Acetylacetonate, unsubstituierte oder ein- oder mehrfach substituierte 1,3-Arylpropan-1,3-dionate, unsubstituierte oder ein- oder mehrfach substituierte Cyclopentadienyl-Anionen, unsubstituierte oder ein- oder mehrfach substituierte Benzol-Derivate.

Als Bindungspartner, die nach Abspaltung aus dem Polymerisations-Katalysator eine stabile elektronisch neutrale oder negative geladene Verbindung ausbilden können, sind auch Bindungspartner anzusehen, welche zusätzliche Stickstoff-, Sauerstoff-, Phosphor- und/oder Schwefel-Atome und/oder Doppelbindungen besitzen, mit denen sie an das Metall-Atom gebunden sind, und die nach Entfernen einer Bindung zum Metall-Atom über mindestens eine weitere Bindung an das Metall-Atom gebunden bleiben. Beispiele hierfür sind Bisphosphine wie zum Beispiel 1,2-Bis(diphenylphosphino)ethan, 1,3-Bis(diphenylphosphino)propan, 1,4-Bis(diphenylphosphino)butan, Diole wie zum Beispiel 1,2-Ethandiol, 1,2- oder 1,3-Propandiol, 2,3-Butandiol, Diamine wie zum Beispiel 1,2-Ethylendiamin, 1,2-Cyclohexylendiamin, 1,2-Diaminobenzol oder -toluol, oder Salen-Verbindungen die durch Reaktion mit Aldehyden von Diaminen wie 1,2-Ethylendiamin, 1,2-Cyclohexylendiamin oder 1,2-Diaminobenzol abgeleitet sind, 1,5-Cyclooctadien oder 1,3,5,7-Cyclooctatetraen.

Bevorzugte Polymerisations-Katalysatoren sind Verbindungen, die mindestens ein Metallatom enthalten ausgewählt aus der Gruppe bestehend aus Bor, Aluminium, Vanadium, Molybdän, Wolfram, Zinn, Bismuth, Metallen der dritten und vierten Nebengruppe sowie Metallen der Reihe der Lanthanoide, Metalle der achten bis zehnten Nebengruppe (wie beispielsweise Eisen, Kobalt, Nickel, Rhodium, Iridium, Palladium, Platin, sowie Kupfer, Zink).

Besonders bevorzugt ist es, wenn die Lewis-saure Komponente ein Metall ausgewählt aus der Gruppe Bor, Zinn, Bismuth, Zink, Kupfer, Molybdän, Wolfram und/oder Vanadium umfasst.

Ganz besonders bevorzugte Polymerisationskatalysatoren sind Bortrifluorid-Diethyletherat, Tris(pentafluorophenyl)boran, Dibutylzinndilaurat (DBTL), Zinnbis(2-ethylhexanoat), Zinn(II)acetat, Kupferbis(2-ethylhexanoat), Kupfernaphthenat, Zinkbis(2-ethylhexanoat), Lithiummolybdat, Molybdändioxydi(acetylacetonat), Gallium-tris(acetylacetonat), Bismuthtris(2-ethylhexanoat), Lithiumorthovanadat, Vanadium(V)oxytriethoxid, Vanadium(V)oxytripropoxid, Vanadium(V)oxytriisopropoxid und/oder Vanadium(V)oxytris(acetylacetonat).

Der Lewis-basische Katalysator (im folgenden auch "basischer Katalysator" genannt) zeichnet sich dadurch aus, dass er Lewis-basische Eigenschaften und somit mindestens ein freies, ungebundenes Elektronenpaar, das eine Einfachbindung ausbilden kann, besitzt. Bevorzugt befindet sich das freie Elektronenpaar an einem Heteroatom, wie Stickstoff, Sauerstoff oder Phosphor, oder einem an mindestens ein Heteroatom gebundenen Kohlenstoffatom. Besonders bevorzugt befindet sich das freie Elektronenpaar an Stickstoff, Sauerstoff oder Phosphor.

Beispiele für basische Katalysatoren sind

i) ionische Verbindungen bestehend aus einem oder mehreren basischen Anionen (wie zum Beispiel Carbonat, lineare oder verzweigte gesättigte oder ein- oder mehrfach ungesättigte C1- bis C20-Carboxylate, Phosphat, Mono- oder Dihydrogenphosphat, Polyphosphate), sowie einem oder mehreren geeignet gewählten Gegenionen, wie beispielsweise die Kationen aus der Reihe der Alkali- oder Erdalkalimetalle, Tetraalkyl-, Tetraaryl-, Monoalkyltriaryl-, Dialkyldiaryl- oder Trialkylmonoarylphosphonium, Tetraalkylammonium, N,N'-Dialkyl-, N,N'-Diaryl-, N-Alkyl-N'-aryl-imidazolium, N,N'-Dialkyl-, N,N'-Diaryl-, N-Alkyl-N'-aryl-imidazolidinium oder N,N'-Dialkyl-, N,N'-Diaryl-, N-Alkyl-N'-aryl-triazolium, N-Alkylpyridinium, oder

ii) molekulare organische Lewis-Basen, beispielsweise tertiäre oder aromatische basische Amine (wie zum Beispiel Triethylamin sowie andere Trialkylamine, Pyridin sowie ein- oder mehrfach substituierte Pyridin-Derivate wie zum Beispiel 2,6-Lutidin, N-Alkyl- oder N-Arylimidazol, 1,4-Diazabicyclo[2.2.2]octan (DABCO), 4-(Dimethylamino)-pyridin (DMAP), 1,8-Diazabicyclo[5.4.0]undec-7-en (DBU), Triazabicyclo[4.4.0]dec-5-ene (TBD), 7-Methyl-1,5,7-triazabicyclo[4.4.0]dec-5-en (MTBD), Trialkyl-, Triaryl- oder gemischte Alkylarylphosphine (wie zum Beispiel Triphenylphosphin, Trimesitylphosphin, Tri(2,6-diisopropylphenyl)phosphin, Tri-tert-butylphosphin) oder N-heterocyclische Carbene (wie zum Beispiel 1,3-Dimesityl-, 1,3-Diisopropyl- oder 1,3-Di-(2,6-diisopropylphenyl)-imidazol-2-yliden, 1,3-Dimesityl-, 1,3-Diisopropyl- oder 1,3-Di-(2,6-diisopropylphenyl)-imidazolidin-2-yliden oder 1,3-Dimesityl-, 1,3-Diisopropyl- oder 1,3-Di-(2,6-diisopropylphenyl)-benzimidazol-2-yliden).

Erfindungsgemäß vorgesehen ist, dass die basische Komponente einen $pK_b$-Wert (Basenstärke) von $\geq 0$ aufweist. Vorzugsweise beträgt dieser $pK_b$-Wert $\geq 1$ bis $\leq 10$, mehr bevorzugt $\geq 1,5$ bis $\leq 8$. Die Basenstärke kann aus der Dissoziationskonstante $pK_a$ der korrespondierenden Säure in wässriger Lösung bei 25 °C bestimmt werden. Im Fall mehrwertiger Basen wird die erste Dissoziationsstufe betrachtet. Zur besseren Einordnung seien einige Beispiele genannt: $NH_3$ weist einen $pK_b$-Wert von 4.79 und das Hydroxidion einen $pK_b$-Wert von -1.74 auf. Der $pK_b$-Wert von Kalium *tert.*-butoxid ist -3.

Insofern werden starke Basen wie Hydroxide und Alkoxide als basische Komponenten des Katalysatorsystems im erfindungsgemäßen Vefahren nicht eingesetzt.

Vorzugsweise ist die basische Komponente ausgewählt aus der Gruppe Alkalicarbonate, Alkalicarboxylate, 1,4-Diazabicyclo[2.2.2]octan (DABCO), 4-(Dimethylamino)-pyridin (DMAP), 1,8-Diazabicyclo[5.4.0]undec-7-en (DBU), Triazabicyclo[4.4.0]dec-5-ene (TBD), 7-Methyl-1,5,7-triazabicyclo[4.4.0]dec-5-en (MTBD), 2,6-Lutidin, *N*-heterocyclische Carbene und/oder Trimesitylphosphin. Besonders bevorzugt sind Cäsiumcarbonat, DABCO, DBU, TBD, MTBD, 2,6-Lutidin und/oder Trimesitylphosphin.

Beispiele für $pK_b$-Werte von bevorzugten basischen Komponenten sind $pK_b = 5,18$ für DABCO, $pK_b = 4,8$ für DMAP und $pK_b = 7,25$ für 2,6-Lutidin.

Bevorzugte Kombinationen von Lewis-saurer Komponente und basischer Komponente sind Dibutylzinndilaurat (DBTL), Zinn(II)acetat, Zinnbis(2-ethylhexanoat), Bismuttris(2-ethylhexanoat), Zinkbis(2-ethylhexanoat), Kupferbis(2-ethylhexanoat) und/oder Kupfernaphthenat mit Cäsiumcarbonat oder mit DABCO.

Die beiden Katalysator-Komponenten des Katalysatorsystems können auch in einer Substanz vereinigt sein, so dass diese Substanz sowohl als Polymerisations-Katalysator als auch als basischer Katalysator fungiert. Solche Substanzen werden im Sinne der Erfindung als zwei unterschiedliche Komponenten angesehen und sind somit ausdrücklich mit eingeschlossen.

So ist es möglich, dass das Katalysatorsystem in Form eines frustrierten Lewis-Paars vorliegt. Bei frustrierten Lewis-Paaren (frustrierte Lewis-Säure-Base-Paare; FLP) sind eine Lewis-Säure LS und eine Lewis-Base LB so ausgewählt, dass sie in freier Form keine Addukte miteinander bilden. Dieses kann durch geeignete, sterisch anspruchsvolle Substituenten erreicht werden.

Im Rahmen der vorliegenden Erfindung bilden LB und LS keine Addukte miteinander, wenn die Bindungsenthalpie LB + LS → LB-LS $\leq 15$ kcal/mol und vorzugweise $\leq 10$ kcal/mol beträgt. Dieser Wert lässt sich mittels Dichtefunktionalrechnungen auf dem B3LYP-Niveau bestimmen. Eine zweckmäßige Alternative zu DFT-Rechnungen ist die Bestimmung der Bindungsenthalpie mittels dynamischer, temperaturabhängiger Kernresonanzspektroskopie (NMR-Spektroskopie). Eine weitere zweckmäßige Alternative zu DFT-Rechnungen ist die Bestimmung der Bindungsenthalpie mittels Titrationskalorimetrie.

In einer Ausführungsform ist LS ein Diarylboran oder ein Triarylboran. Solche Diaryl- oder Triarylborane können beispielsweise unsubstituierte oder substituierte Phenylreste tragen. Bevorzugt ist, dass LS Bis(pentafluorophenyl)boran oder Tris(pentafluorophenyl)boran ist. Bedingt durch die Fluorsubstituenten sind diese Verbindungen starke Lewis-Säuren.

In einer weiteren Ausführungsform ist LB ein trisubstituiertes Phosphin. Solche Phosphine können beispielsweise unsubstituierte oder substituierte Phenylreste tragen. Bevorzugt ist, dass LB Tris(ortho-tolyl)phosphin, Tris(2,4,6-trimethylphenyl)phosphin, Tri-*tert.*-butylphosphin oder [Bis-2,5-(trifluoromethyl)phenyl]diphenyl-phosphin ist. Bei diesen Phosphinen ist das P-Atom durch die Substituenten sterisch stark abgeschirmt.

Frustrierte Lewis-Paare sind beispielsweise in Angew. Chem. Int. Ed. (2010), 49, 46, Dalton Trans. (2011), 40, 7475 oder Angew. Chem. Int. Ed. (2011), 50, 10294 beschrieben. Bevorzugte frustrierte Lewis-Paare sind (4-Dimesitylphosphino-2,3,5,6-tetrafluorophenyl)di(pentafluorophenyl)boran und (2-Dimesitylphosphinoethyl)di(pentafluorophenyl)boran.

Für die Herstellung der erfindungsgemäßen nicht-alternierenden Formaldehyd/$CO_2$-Copolymere wird ein Gemisch aus Formaldehyd oder einer geeigneten Formaldehyd-Quelle mit Kohlendioxid, ggf. in einem geeigneten Lösungsmittel, mit mindestens einem Polymerisationskatalysator und mindestens einem basischen Katalysator in Kontakt gebracht.

Formaldehyd kann in gasförmigem Zustand, ggf. als Mischung mit Inertgasen wie zum Beispiel Stickstoff oder Argon oder als Mischung mit gasförmigem, überkritischem oder flüssigem Kohlendioxid, oder als Formaldehyd-Lösung eingesetzt werden. Bei Formaldehyd-Lösungen kann es sich um wässrige Formaldehyd-Lösungen mit einem Formaldehyd-Gehalt zwischen 1 Gew.% und 37 Gew.% handeln, die gegebenenfalls bis zu 15 Gew.% Methanol als Stabilisator enthalten. Alternativ können Lösungen von Formaldehyd in polaren organischen Lösungsmitteln wie zum Beispiel Methanol oder höheren ein- oder mehrwertigen Alkoholen, 1,4-Dioxan, Acetonitril, *N,N*-Dimethylformamid (DMF), *N,N*-Dimethylacetamid, Dimethylsulfoxid (DMSO), zyklischen Carbonaten, zum Beispiel Ethylencarbonat oder Propylencarbonat, *N*-Methylpyrrolidon (NMP), Sulfolan, Tetramethylharnstoff, *N,N'*-Dimethylethylenharnstoff oder Mischungen derselben untereinander, mit Wasser und/oder anderen Lösungsmitteln eingesetzt werden. Die Anwesenheit weiterer Substanzen, zum Beispiel als Stabilisatoren, in Lösung ist nicht ausgeschlossen.

Alternativ kann Formaldehyd *in situ* aus einer geeigneten Formaldehyd-Quelle generiert werden. Als Formaldehyd-Quelle können Substanzen zum Einsatz kommen, welche chemisch gebundenen Formaldehyd, üblicherweise in Form von Oxymethylen-Gruppen, enthalten, und die unter geeigneten Bedingungen in der Lage sind, Formaldehyd freizusetzen. Geeignete Bedingungen für die Freisetzung können zum Beispiel erhöhte Temperaturen und/oder den Einsatz von Katalysatoren und/oder die Gegenwart von Säuren, Basen oder anderen Reagenzien, die zu der Freisetzung von monomerem Formaldehyd führen, beinhalten. Bevorzugte Formaldehyd-Quellen sind 1,3,5-Trioxan, Paraformaldehyd, Polyoxymethylen, Dimethylacetal, 1,3-Dioxolan, 1,3-Dioxan und/oder 1,3-Dioxepan, besonders bevorzugt sind 1,3,5-Trioxan und Paraformaldehyd.

Kohlendioxid kann in gasförmigem, festem, flüssigem oder überkritischem Zustand, bevorzugt im gasförmigen oder festen, besonders bevorzugt im gasförmigen Zustand eingesetzt werden. Bei Einsatz von Kohlendioxid im gasförmigen Zustand wird ein Kohlendioxid-Partialdruck von 1 bis 73,8 bar, bevorzugt von 1 bis 50 bar, besonders bevorzugt von 5 bis 30 bar gewählt. Die Kombination aus Druck und Temperatur wird bei Verwendung von gasförmigem Kohlendioxid derart gewählt, dass Kohlendioxid sich als Reinsubstanz unter den gewählten Reaktionsbedingungen im gasförmigen Zustand befindet. Die entsprechenden Bedingungen können anhand des Phasendiagrammes abgeleitet werden. Nach Einbringen von gasförmigem Kohlendioxid in den Reaktor löst sich dieses teilweise oder ganz in der Reaktionsmischung.

Der Polymerisationskatalysator (Lewis-saure Komponente) kann in einem molaren Verhältnis von 1:100000 bis 1:10, bevorzugt 1:100000 bis 1:50, besonders bevorzugt 1:50000 bis 1:90 zu Formaldehyd beziehungsweise den in der Formaldehyd-Quelle enthaltenen Formaldehyd-Äquivalenten eingesetzt werden.

Die basische Komponente kann in einem molaren Verhältnis von 1:100000 bis 1:1, bevorzugt 1:100000 bis 1:5, besonders bevorzugt 1:50000 bis 1:10 und ganz besonders bevorzugt 1:500 bis 1:10 zu Formaldehyd beziehungsweise den in der Formaldehyd-Quelle enthaltenen Formaldehyd-Äquivalenten eingesetzt werden.

Das molare Verhältnis von Lewis-saurer Komponente zu basischer Komponente kann 1:2000 bis 10:1, bevorzugt 1:1000 bis 10:1, besonders bevorzugt 1:1000 bis 1:1 und ganz besonders bevorzugt 1:500 bis 1:1 betragen.

Neben dem Polymerisationskatalysator und dem basischen Katalysator können weitere Katalysatoren, Cokatalysatoren oder Additive, die zum Beispiel die Löslichkeit des basischen Katalysators heraufsetzen, wie beispielsweise Kronenether oder Tetraalkylammonium-Salze, in substöchiometrischen, stöchiometrischen oder überstöchiometrischen Mengen relativ zu den erfindungsgemäßen Katalysatoren zum Einsatz kommen.

Die Reaktion wird in der Regel bei einer Temperatur zwischen einschließlich 20 und 250 °C, bevorzugt zwischen einschließlich 40 und 200 °C und besonders bevorzugt zwischen einschließlich 60 und 180 °C durchgeführt. Bei Verwendung einer Formaldehyd-Quelle, die chemisch gebundenen Formaldehyd enthält, sollte die Reaktionstemperatur oberhalb der unter den gegebenen Bedingungen vorliegenden Zersetzungstemperatur liegen. Bei Anwesenheit von geeigneten Katalysatoren, die die Freisetzung von Formaldehyd beschleunigen, kann die Reaktionstemperatur unterhalb der Temperatur für die nicht-katalysierte thermische Zersetzung liegen. Ggf. können die erfindungsgemäßen Polymerisations-Katalysatoren und/oder basischen Katalysatoren ebenfalls als Katalysatoren für die Freisetzung von Formaldehyd fungieren.

Als Lösungsmittel können beispielsweise Wasser, Methanol oder höhere ein- oder mehrwertige Alkohole, unpolare organische Lösungsmittel wie zum Beispiel lineare oder verzweigte Alkane oder Alkan-Gemische, Toluol, die verschiedenen Xylol-Isomere oder Gemische derselben, Mesitylen, ein oder mehrfach halogenierte Aromaten oder Alkane, offenkettige oder zyklische Ether wie zum Beispiel Tetrahydrofuran (THF) oder Methyl-*tert*-butylether (MTBE), offenkettige oder zyklische Ester, oder polare aprotische Lösungsmittel wie zum Beispiel 1,4-Dioxan, Acetonitril, *N,N*-Dimethylformamid (DMF), *N,N*-Dimethylacetamid, Dimethylsulfoxid (DMSO), zyklische Carbonate, zum Beispiel Ethylencarbonat oder Propylencarbonat, *N*-Methylpyrrolidon (NMP), Sulfolan, Tetramethylharnstoff, *N,N'*-Dimethylethylenharnstoff oder Mischungen derselben untereinander, mit Wasser und/oder anderen Lösungsmitteln eingesetzt werden. Auch der Einsatz von flüssigem oder überkritischem Kohlendioxid als Lösungsmittel in Reinsubstanz oder als Gemisch mit einem der oben genannten Lösungsmittel ist möglich. Bevorzugt sind Wasser, Alkohole, polare aprotische Lösungsmittel und überkritisches Kohlendioxid, besonders bevorzugt 1,4-Dioxan, Acetonitril, DMF, *N,N*-Dimethylacetamid, DMSO, Ethylencarbonat, Propylencarbonat, NMP und Sulfolan.

Die Reaktionszeit beträgt in der Regel 0,05 bis 120 Stunden, bevorzugt 0,5 bis 48 Stunden, besonders bevorzugt 1 bis 24 Stunden. Als Reaktionszeit wird die Zeitspanne angesehen, in welcher das Reaktionsgemisch bei der gewählten Reaktionstemperatur mit dem Katalysatorgemisch in Kontakt ist.

Die Reaktion kann gemäß einem diskontinuierlich, halbkontinuierlich oder kontinuierlich betriebenen Verfahren durchgeführt werden. Bei halbkontinuierlicher Reaktionsführung können die Reaktionspartner einzeln als Gase oder Flüssigkeiten, oder im Gemisch zur laufenden Reaktion zudosiert werden. In einer bevorzugten Ausführungsform des halbkontinuierlich Verfahrens wird ein Gemisch aus Polymerisations-Katalysator, basischem Katalysator und einem Lösungsmittel vorgelegt und Formaldehyd beziehungsweise die Formaldehyd-Quelle in Reinsubstanz als Gas oder Flüssigkeit oder in Lösung der Reaktion zudosiert. Die Reaktion kann bei einer halbkontinuierlichen oder kontinuierlichen Reaktionsführung in einem kontinuierlich betriebenen Rührkessel (CSTR), einer RührkesselKaskade oder in einem Strömungsrohr durchgeführt werden.

In einer Ausführungsform des Verfahrens wird das resultierende nicht-alternierende Formaldehyd/$CO_2$-Copolymer durch Zugabe von Epoxiden stabilisiert. Die Zugabe von Epoxiden zum Reaktionsgemisch kann während der Polymerisationsreaktion, direkt im Anschluss an die Polymerisationsreaktion, nach Abschluss der Polymerisationsreaktion oder zum isolierten Produkt erfolgen. Bevorzugte Epoxide sind Ethylenoxid, Propylenoxid, Cyclohexenoxid oder Styroloxid. Ggf. erfolgt die Stabilisierung in Gegenwart eines weiteren Katalysators, der die Reaktion von OH-Gruppen mit Epoxiden katalysiert. Geeignete Katalysatoren sind beispielsweise Kaliumhydroxid und andere Alkali- oder Erdalkali-Hydroxide, Titan-Verbindungen wie zum Beispiel Titantetrachlorid oder Titantetraalkoholate, Dialkylzink-Verbindungen, insbesondere Diethylzink, oder Zink-Komplexe wie Zink-Phenoxid oder andere Zink-Alkoholate, Zink-$\beta$-Diiminate, $\beta$-Diketiminat-Zink-Amid, gemischte Zink-Cobalt-Cyanide, Chrom(III)-Salen-Komplexe oder Cobalt(III)-Salen-Komplexe.

In einer weiteren Ausführungsform des Verfahrens wird das resultierende nicht-alternierende Formaldehyd/$CO_2$-Copolymer durch Zugabe von zyklischen Acetalen stabilisiert. Die Zugabe der zyklischen Acetale zum Reaktionsgemisch kann während der Polymerisationsreaktion, direkt im Anschluss an die Polymerisationsreaktion, nach Abschluss der Polymerisationsreaktion oder zum isolierten Produkt erfolgen. Bevorzugte zyklische Acetale sind 1,3-Dioxolan, 1,3-Dioxan oder 1,3-Dioxepan. Ggf. erfolgt die Stabilisierung in Gegenwart eines weiteren Katalysators, der die Reaktion von OH-Gruppen mit Acetalen katalysiert. Geeignete Katalysatoren sind beispielsweise Bortrifluorid-Etherat, Aluminiumtrichlorid, Zinntetrachlorid, Zinndialkoholate oder Zinndicarboxylate, DBTL oder Titantetrachlorid.

In einer weiteren Ausführungsform des Verfahrens wird das resultierende nicht-alternierende Formaldehyd/$CO_2$-Copolymer durch Zugabe von Carbonsäureanhydriden stabilisiert. Die Zugabe der Carbonsäureanhydride zum Reaktionsgemisch kann während der Polymerisationsreaktion, direkt im Anschluss an die Polymerisationsreaktion, -nach Abschluss der Polymerisationsreaktion oder zum isolierten Produkt erfolgen. Bevorzugte Carbonsäureanhydride sind Essigsäureanhydrid, Glutarsäureanhydrid, Maleinsäureanhydrid oder Phthalsäureanhydrid. Ggf. erfolgt die Stabilisierung in Gegenwart eines weiteren Katalysators, der die Reaktion von OH-Gruppen mit Carbonsäureanhydriden katalysiert. Geeignete Katalysatoren sind beispielsweise Bortrifluorid-Etherat, Aluminiumtrichlorid, Zinntetrachlorid, Titantetrachlorid, Pyridin, DABCO oder Trialkylamine.

In einer weiteren Ausführungsform des Verfahrens wird das resultierende nicht-alternierende Formaldehyd/$CO_2$-Copolymer durch Zugabe von organischen Carbonaten stabilisiert. Die Zugabe der organischen Carbonate zum Reaktionsgemisch kann während der Polymerisationsreaktion, direkt im Anschluss an die Polymerisationsreaktion, nach Abschluss der Polymerisationsreaktion oder zum isolierten Produkt erfolgen. Bevorzugte organische Carbonate sind Dimethylcarbonat, Diphenylcarbonat, Ethylencarbonat, Propylencarbonat, Trimethylencarbonat, Neopentylcarbonat. Ggf. erfolgt die Stabilisierung in Gegenwart eines weiteren Katalysators, der die Reaktion von OH-Gruppen mit Carbonaten katalysiert. Geeignete Katalysatoren sind beispielsweise Zink-Komplexe wie Zink-Phenoxid oder andere Zink-Alkoholate, Zink-$\beta$-Diiminate, $\beta$-Diketiminat-Zink-Amid, gemischte Zink-Cobalt-Cyanide, Chrom(III)-Salen-Komplexe, Cobalt(III)-Salen-Komplexe, Bortrifluorid-Etherat, Aluminiumtrichlorid, Zinntetrachlorid oder Titantetrachlorid.

In einer weiteren Ausführungsform des Verfahrens wird das resultierende nicht-alternierende Formaldehyd/$CO_2$-Copolymer durch Zugabe von organischen Isocyanaten stabilisiert. Die Zugabe der organischen Isocyanate zum Reaktionsgemisch kann während der Polymerisationsreaktion, direkt im Anschluss an die Polymerisationsreaktion, nach Abschluss der Polymerisationsreaktion oder zum isolierten Produkt erfolgen. Beispiele sind Methylisocyanat, 4-Toluylisocyanat, 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe (polymeres MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit $C_1$ bis $C_6$-Alkylgruppen. Bevorzugt sind hierbei Methylisocyanat, 4-Toluylisocyanat, HDI, TDI und MDI sowie Isocyanat-Präpolymere, die aus der Reaktion von Polyetherpolyolen mit Diisocyanaten wie beispielsweise MDI oder TDI hervorgehen. Ggf. erfolgt die Stabilisierung in Gegenwart eines weiteren Katalysators, der die Reaktion von OH-Gruppen mit Isocyanaten katalysiert. Geeignete Katalysatoren sind beispielsweise Dibutylzinndilaurat (DBTL), Zinn(II)dialkoholate, Zinn(II)dicarboxylate, Zinn(II)dihalogenide, Lithiummolybdat, Molybdändioxydi(acetylacetonat), Galliumtris(acetylacetonat), Bismuthtris(2-ethylhexanoat), Lithiumorthovanadat, Vanadium(V)oxytriethoxid, Vanadium(V)oxytripropoxid, Vanadium(V)oxytriisopropoxid oder Vanadium(V)oxytris(acetylacetonat).

Im Anschluss an die Reaktion der nicht-alternierenden Formaldehyd/$CO_2$-Copolymere mit Carbonsäureanhydriden, organischen Carbonaten oder organischen Isocyanaten kann vor oder nach Ablassen des gegebenenfalls vorhandenen Drucks eine Deaktivierung der im Reaktionsgemisch vorhandenen überschüssigen unreagierten Carbonsäureanhydride, organischen Carbonate oder organischen Isocyanate sowie gegebenenfalls des Katalysators, beispielsweise durch Wasser, wässrige Basen wie z.B. Alkali- oder Erdalkalihydroxid-, Alkalicarbonat- oder Alkalihydrogencarbonat-, Alkalialkoxid-, Alkalicarboxylat-, wässrige Ammoniaklösung, wässrige Pufferlösungen, welche Gemische aus Carbonat- und/oder Phosphat-Salzen in Kombination mit einem oder mehreren Hydrogencarbonat-, Phosphat-, Hydrogenphosphat- und/oder Dihydrogenphosphat-Salzen enthalten, Alkoholen, Aminen oder Mischungen von zwei oder mehr der vorgenannten Komponenten erfolgen.

Die Isolierung des nicht-alternierenden Formaldehyd/$CO_2$-Copolymers erfolgt in der Regel durch Ablassen des Überdrucks, Abdekantieren der Produktphase beziehungsweise Abfiltrieren der festen Bestandteile, ggf. nach Zugabe eines geeigneten Lösungsmittels, und Entfernen der flüchtigen Komponenten, zum Beispiel durch Vakuumdestillation. Zusätzliche Reinigungsschritte, zum Beispiel zum Entfernen der Katalysatoren, sind ebenfalls mit eingeschlossen.

In den erhaltenen erfindungsgemäßen nicht-alternierenden Formaldehyd/$CO_2$-Copolymeren kann das molare Verhältnis von Formaldehyd- zu $CO_2$-Einheiten zwischen >1:1 und 30:1, bevorzugt zwischen 1,5:1 und 25:1 und besonders bevorzugt zwischen 2:1 und 15:1 liegen. Dieses Verhältnis lässt sich beispielsweise NMR-spektroskopisch oder massenspektrometrisch bestimmen. Weiterhin kann das Verhältnis von Formaldehyd- zu $CO_2$-Einheiten durch thermische Zersetzung und Analyse der Zersetzungsprodukte, beispielsweise per Elementaranalyse oder Thermogravimetrische Analyse-Massenspektroskopie (TGA-MS) bestimmt werden.

Neben Formaldehyd und $CO_2$ können in der Polymerkette auch andere Einheiten wie z.B. Oxyethylen-, 2- oder 3-Oxypropylen-, 4-Oxybutylen-Gruppen, sowieals Endgruppen zusätzlich Carboxylate wie z.B. Acetat-, 2-(Hydroxycarbonylethenyl)carboxylat-, 3-(Hydroxycarbonylpropyl)carboxylat, 2-(Hydroxycarbonylphenyl)carboxylat-Gruppen, Carbonate wie z.B. Methoxycarbonyloxy-, Phenoxycarbonyloxy-, 2-Hydroxyethoxycarbonyloxy-, 2-Hydroxypropyloxycarbonyloxy-, 3-Hydroxypropyloxycarbonyloxy-, (2-Hydroxy-2,3,3-trimethyl)ethoxycarbonyloxy-, (2-Hydroxy-2,2,3-trimethyl)ethoxycarbonyloxy-Gruppen oder Carbamate wie z.B. *N*-Methylcarbamat-, 4-Toluylcarbamat-, 4-(4'-Isocyanatophenylmethylphenyl)carbamat-, 3-Isocyanatophenylcarbamat-, 4-Isocyanatophenylcarbamat-, 6-Isocyanatohexylcarbamat-Gruppen enthalten sein.

Die erhaltenen erfindungsgemäßen nicht-alternierenden Formaldehyd/$CO_2$-Copolymere sind farblose bis hellbraune Flüssigkeiten oder Wachse und weisen ein zahlenmittleres Molekulargewicht $M_n$ (bestimmt über Gel-Permeations-Chromatographie gegen Polymethylmethacrylat (PMMA)-, Polypropylenglykol- oder Polystyrol-Standards) von 330 bis 1 000 000 g/mol, bevorzugt 350 bis 200 000 g/mol, besonders bevorzugt 350 bis 15 000 g/mol und ganz besonders bevorzugt 400 bis 5000 g/mol auf.

In einer bevorzugten Ausführungsform enthalten die erfindungsgemäßen Formaldehyd/$CO_2$-Copolymere durchschnittlich 1 bis 50, bevorzugt 1 bis 20 und besonders bevorzugt 2 bis 5 OH-Gruppen pro Polymerkette. Diese durchschnittliche Funktionalität lässt sich mit den in der Polyoltechnologie üblichen Methoden, beispielsweise durch Vergleich von Massenspektren vor und nach Funktionalisierung der Endgruppen beipielsweise über Trimethylsilylierung, bestimmen.

Die nach dem erfindungsgemäßen Verfahren erhältlichen nicht-alternierenden Formaldehyd/$CO_2$-Copolymere weisen einen geringen Gehalt an Nebenprodukten auf und können problemlos verarbeitet werden, insbesondere durch Umsetzung mit Di- und/oder Polyisocyanaten zu Polyurethanen, insbesondere Polyurethan-Weichschaumstoffen. Für Polyurethananwendungen werden vorzugsweise nicht-alternierende Formaldehyd/$CO_2$-Copolymere mit einer Funktionalität von mindestens 2 eingesetzt. Des Weiteren können die erfindungsgemäßen nicht-alternierenden Formaldehyd/$CO_2$-Copolymere als plastische Werkstoffe, ggf. nach Zusatz weiterer Additive, beispielsweise in Anwendungen im Polyoxymethylen-Sektor eingesetzt werden. Weiterhin können die nach dem erfindungsgemäßen Verfahren erhältlichen nicht-alternierenden Formaldehyd/$CO_2$-Copolymere in Anwendungen wie Wasch- und Reinigungsmittelformulierungen, Bohrflüssigkeiten, Kraftstoffadditiven, ionischen und nicht-ionischen Tensiden, Schmiermitteln, Prozesschemikalien für die Papier- oder Textilherstellung oder kosmetischen Formulierungen verwendet werden. Dem Fachmann ist bekannt, dass abhängig vom jeweiligen Anwendungsgebiet die zu verwendenden nicht-alternierenden Formaldehyd/$CO_2$-Copolymere gewisse Stoffeigenschaften wie beispielsweise Molekulargewicht, Viskosität, Funktionalität und/oder Hydroxylzahl erfüllen müssen.

**Beispiele**

Die Erfindung wird anhand der nachfolgenden Figuren und Beispiele näher erläutert, ohne jedoch darauf beschränkt zu sein.

Folgende Verbindungen wurden als Formaldehyd-Quelle eingesetzt:

Paraformaldehyd (Aldrich) [30525-89-4]: Aldrich (Kat.-Nr. 16005)

Paraformaldehyd (Acros Organics) [30525-89-4]: Acros Organics (Kat.-Nr. 416780)

Die Berechnung der enthaltenen Formaldehyd-Äquivalente n(CH$_2$O) in mol erfolgte (unter Vernachlässigung des Gehaltes an Endgruppen) nach n(CH$_2$O) = m(Paraformaldehyd) / 30,03 g/mol, wobei m(Paraformaldehyd) für die Masse an eingesetztem Paraformaldehyd in g steht.

Folgende Verbindungen wurden als Lewis-saure Komponente eingesetzt:

Sn-Kat. 1: Dibutylzinndilaurat (DBTL) [77-58-7], Aldrich (Kat.-Nr. 291234), 95%

Sn-Kat. 2: Zinn(II)acetat [638-39-1], Aldrich (Kat.-Nr. 345164)

Sn-Kat. 3: Borchi® Kat 28, OMG Borchers GmbH, enthält Zinnbis(2-ethylhexanoat) [301-10-0]; Zinn-Gehalt 28,0-29,3%

Bi-Kat. 1: Borchi® Kat 24, OMG Borchers GmbH, enthält 65-85% Bismuttris(2-ethylhexanoat) [67874-71-9]

Zn-Kat. 1: Borchi® Kat 22, OMG Borchers GmbH, enthält 100% Zinkbis(2-ethylhexanoat) [85203-81-2]

Cu-Kat. 1: Soligen® Copper 8, OMG Borchers GmbH, enthält 20-40% Kupfer-bis(2-ethylhexanoat) [22221-10-9] und 20-40% Kupfernaphthenat [1338-02-9]; Kupfer-Gehalt 7.8-8.2%

Folgende Verbindungen wurden als basische Komponente eingesetzt:

Base 1: Cäsiumcarbonat (CS$_2$CO$_3$) [534-17-8], Aldrich (Kat.-Nr. 441902), ReagentPlus®, 99%

Base 2: 1,4-Diazabicyclo[2.2.2]octan (DABCO) [280-57-9]; Sigma-Aldrich (Kat.-Nr. D27802), ReagentPlus®, ≥ 99.0%

Folgende Verbindungen wurden als Stabilisierungsreagenz eingesetzt:

Essigsäureanhydrid [108-24-7]: Sigma-Aldrich (Kat.-Nr. 320102), ReagentPlus®, ≥ 99%

Beschreibung der Methoden:

Die Molmassenverteilungen wurden mittels Gel-Permeations-Chromatographie (GPC) ermittelt.

Gel-Permeations-Chromatographie (GPC): Die Messungen mit DMF als Eluenten erfolgten auf dem Gerät Agilent 1200 Series der Firma Agilent, Elutionsmittel: 1 g/L LiBr in DMF (UV/IR grade), Lagerung unter N$_2$; Flussrate: 1,0 mL/min; Autosampler: Jasco 2031plus; HPLC-Pumpe: ERC/Knauer K-1001; Detektor: Wellchrom RI-/Visko-Dualdetektor WEG/ERC; Säulenkombination: GRAM 50×8 mm, 10 μm, 30 Å; GRAM 300×8 mm, 10 μm, 30 Å; GRAM 300×8 mm, 10 μm, 100 Å; GRAM 300×8 mm, 10 μm, 1000 Å; GRAM 300×8 mm, 10 μm, 10000 Å; Degasser: ERC PL-DG802. Die Molekulargewichtskalibrierung erfolgte mit PMMA-Standards der Firma "PSS Polymer Standards Service". Als Messaufnahme- und Auswertungssoftware wurde das Programmpaket "PSS WinGPC Unity" verwendet. Die Aufnahme der GPC Chromatogramme erfolgte gemäß DIN 55672-1, wobei statt THF als Eluent LiBr in DMF eingesetzt wurde.

Die Messungen mit Chloroform als Eluenten erfolgten auf dem Gerät Agilent 1200 Series (G1310A Iso Pump, G1329A ALS, G1316A TCC, G1362A RID, G1365D MWD) der Firma Agilent, Detektion über RID; Elutionsmittel: Chloroform (GPC grade), Flussrate 1,0 ml/min; Säulenkombination: PSS SDV Vorsäule 8×50 mm (5 μm), 2× PSS SDV linear S 8×300 mm (5 μm). Polystyrolproben bekannter Molmasse der Firma "PSS Polymer Standards Service" wurden zur Kalibrierung verwendet. Als Messaufnahme- und Auswertungssoftware wurde das Programmpaket "PSS WinGPC Unity" verwendet. Die Aufnahme der GPC Chromatogramme erfolgte gemäß DIN 55672-1, wobei statt THF als Eluent Chloroform eingesetzt wurde.

Die Bestimmung der Viskosität erfolgte auf einem Physica MCR 501 Rheometer der Fa. Anton Paar. Es wurde eine Kegel-Platte-Konfiguration mit einem Abstand von 50 μm gewählt (Messsystem DCP25). 0,1 g der Substanz wurde auf der Rheometerplatte aufgebracht und bei 25 °C einer Scherung von 0,01 bis 1000 1/s unterworfen und für 10 min alle 10 s die Viskosität gemessen. Angegeben ist die über alle Messpunkte gemittelte Viskosität.

OH-Zahl-Bestimmung: Die OH-Zahl (Hydroxylzahl) wurde in Anlehnung an DIN 53240-2 bestimmt, wobei jedoch *N*-Methylpyrrolidon anstelle von THF/Dichlormethan als Lösungsmittel verwendet wurde. Es wurde mit 0,5 molarer ethanolischer KOH Lösung titriert (Endpunkt-Erkennung mittels Potentiometrie). Als Prüfsubstanz diente Rizinusöl mit durch Zertifikat festgelegter OH-Zahl. Die Angabe der Einheit in "mg$_{KOH}$/g" bezieht sich auf mg[KOH]/g[Produkt]. Die OH-Zahl steht gemäß nachfolgender Gleichung in Beziehung zur Äquivalentmolmasse.

$$\text{OH-Zahl } [mg_{KOH}/g] = 56100 \, [mg_{KOH}/mol] \, / \, \text{Äquivalentmolmasse } [g/mol]$$

Unter Äquivalentmolmasse ist die durch die Zahl der aktiven Wasserstoffatome (Funktionalität) geteilte zahlenmittlere Gesamtmolmasse des aktive Wasserstoffatome enthaltenden Materials zu verstehen.

Infrarot (IR)-Spektroskopie: Die Messungen erfolgten auf einem Bruker Alpha-P FT-IR-Spektrometer. Die Messungen erfolgten in Reinsubstanz. Signalintensitäten: vs = very strong (90-100% Absorbance), s = strong (70-90% Absorbance), m = medium (30-70% Absorbance), w = weak (10-30% Absorbance), vw = very weak (0-10% Absorbance); b = verbreiterte Bande.

$^1$H-NMR-Spektroskopie: Die Messungen erfolgten auf dem Gerät Bruker AV400 (400 MHz) oder Bruker AV600 (600 MHz) der Firma Bruker. Die Kalibrierung der chemischen Verschiebungen erfolgte relativ zum Lösungsmittelsignal (DMSO-d$^6$, $\delta$ = 2,50 ppm oder CDCl$_3$, $\delta$ = 7,14 ppm); s = Singulett, m = Multiplett, bs = verbreitertes Singulett. Die Angabe der Flächenintegrale der einzelnen $^1$H-Signale erfolgte relativ zueinander.

$^{13}$C-NMR-Spektroskopie: Die Messungen erfolgten auf dem Gerät Bruker AV400 (400 MHz) oder Bruker AV600 (600 MHz) der Firma Bruker. Die Kalibrierung der chemischen Verschiebungen erfolgte relativ zum Lösungsmittelsignal (DMSO-d$^6$, $\delta$ = 39,52 ppm oder CDCl$_3$, $\delta$ = 77,16 ppm). APT (attached proton test): CH$_2$, C$_{quart}$: positives Signal (+); CH, CH$_3$: negatives Signal (-). HMBC: Hetero multiple bond correlation. HSQC: Heteronuclear single-quantum correlation.

Electrospray-Massenspektrometrie (ESI-MS): Die Messungen erfolgten auf dem Gerät LTQ Orbitrap XL der Firma Thermo Fisher Scientific; die Proben wurden in DMSO gelöst und mit MeOH verdünnt.

ICP-OES (inductively coupled plasma optical emission spectroscopy): Die Probe wurde mittels Mikrowellendruckaufschluss (MarsXpress der Firma CEM Mikrowellentechnik) bei einer Temperatur von 180 °C mit Salpetersäure in einem Teflongefäß gelöst und anschließend mittels ICP-OES auf dem Gerät Spectro Syros Vision der Firma Spectro analysiert.

Beispiel 1: Herstellung eines Formaldehyd/CO$_2$-Copolymers mit Paraformaldehyd, Sn-Kat. 1 (DBTL) und Base 1 (Cäsiumcarbonat)

In einem 200 ml Reaktor aus Edelstahl wurden 15,14 g (entsprechend 0,504 mol Formaldehyd-Äquivalenten) Paraformaldehyd (Aldrich), 1,66g (5,09 mmol) Base 1 (CS$_2$CO$_3$) und 12,8 mg (0,02 mmol) Sn-Kat. 1 (DBTL) vorgelegt. Dann wurden 40 ml 1,4-Dioxan zugegeben. Anschließend wurde 10 bar (absolut) Kohlendioxid aufgepresst und das Reaktionsgemisch auf 120 °C erwärmt. Nach Erreichen der Temperatur von 120 °C wurde der Überdruck mit Kohlendioxid auf 30 bar (absolut) eingestellt und das Reaktionsgemisch bei 500 U/min mit einem Gaseintragsrührer 16 h bei 120 °C gerührt. Nach Abkühlen auf 25 °C wurde der Überdruck abgelassen. Es wurde ein Zwei-PhasenGemisch erhalten. Die überstehende, niederviskose Phase wurde entfernt und die viskose Produktphase bei 2 × 10$^{-3}$ bar für drei Stunden getrocknet. Es wurden 7,07 g eines viskosen, farblosen Öls erhalten.

Im Gegensatz zum Ausgangsmaterial Paraformaldehyd ist das Produkt löslich in DMF und DMSO.

Über Gel-Permeations-Chromatographie (GPC) gegen PMMA-Standards mit DMF als Eluent wurde ein mittleres Molekulargewicht $M_n$ = 407 g/mol und ein Polydispersitätsindex PDI = 1,27 ermittelt.

IR: v = 3321 (b, w, v[OH]), 2888 (w, v[CH$_2$]), 1772 (vw, v[C=O]), 1591 (w), 1411 (vw), 1380 (vw), 1347 (vw), 1290 (vw), 1256 (vw), 1113 (w), 1017 (m), 869 (w), 614 (w) cm$^{-1}$.

$^1$H-NMR (400 MHz, DMSO-d$^6$): $\delta$ = 1,66 (s, 0,006 H), 3,16 (s, 0,015 H), 3,20 (s, 0,034 H), 3,24 (s, 0,01 H), 3,31 (s, 0,052 H), 3,39 - 3,56 (m, 1,00 H), 3,75 (s, 0,025) 4,03 - 4,22 (m, 0,033 H), 4,32 - 4,42 (m, 0,007 H), 4,52 - 4,78 (m, 0,399 H), 8,44 (bs, 0,024 H) ppm.

$^{13}$C-APT-NMR (125 MHz, DMSO-d$^6$): $\delta$ = 24,8 (+), 53,8 (+), 59,6 (+), 59,8 (+), 60,0 (+), 61,5 (+), 62,1 (+), 62,3 (+), 62,7 (+), 62,8 (+), 62,9 (+), 63,0 (+), 63,7 (+), 64,2 (+), 66,3 (+), 67,9 (-), 68,1 (+), 68,7 (+), 68,9 (+), 69,0 (+), 70,4 (+), 71,7 (-), 71,8 (-), 72,2 (-), 73,5 (+), 74,0 (+), 76,4 (-), 76,4 (-), 76,5 (+), 81,9 (+), 83,7 (+), 84,7 (+), 84,9 (+), 88,8 (+), 89,0 (+), 89,1 (+), 89,3 (+), 90,8 (+), 90,9 (-), 91,6 (+), 166,7 (-), 175,3 (+), 175,5 (+) ppm.

Über HMBC-NMR-Spektroskopie wurde für das $^{13}$C-Signal bei 175,3 eine Fernkopplung zu einem $^1$H-Signal bei 3.75 ppm beobachtet. Über HSQC-NMR-Spektroskopie kann dieses $^1$H-Signal dem positiven $^{13}$C-Signal (CH$_2$-Gruppe) bei 62.1 ppm zugeordnet werden. Ferner zeigt das $^1$H-Signal bei 3,75 ppm laut HMBC-NMR-Spektroskopie weitere Fernkopplungen zu positiven $^{13}$C-Signalen bei 66,3 und 69,0 ppm (CH$_2$-Gruppen), welche ihrerseits über HSQC-NMR-Spektroskopie $^1$H-Signalen bei 3,58 und 3,68 ppm zugeordnet werden. Somit ist gezeigt, dass das $^{13}$C-Signal bei 175,3 ppm über Fernkopplungen mit einer Sequenz von 3 Methylen-Einheiten in Verbindung steht. Es liegt somit ein nicht-alternierendes Formaldehyd/CO$_2$-Copolymer vor.

ESI-MS (FTMS +p ESI):

Das gleichzeitige Vorliegen von CO$_2$- und Formaldehyd-Einheiten wird im ESI-Massenspektrum durch die folgenden Massensignale gezeigt:

M1: *m/z* = 609,11582

M2: *m/z* = 639,12654

M3: *m/z* = 653,10595

M4: *m/z* = 683,11608

Die Verlängerung der Kette in M1 um eine Formaldehyd-Einheit führt zu M2 ($\Delta m$ = 30,01072 amu, berechn.: $\Delta m(CH_2O)$ = 30,01056 amu), die Verlängerung von M1 um eine $CO_2$-Einheit zu M3 ($\Delta m$ = 43,99013 amu, berechn.: $\Delta m(CO_2)$ = 43,98983 amu). Die Verlängerung von M1 um je eine $CO_2$- und eine Formaldehyd-Einheit führt zu M4 ($\Delta m$ = 74,00026 amu, berechn.: $\Delta m(CH_2O+CO_2)$ = 74,00039 amu). Damit ist gezeigt, dass M4 von M1 durch Verlängerung um eine Formaldehyd- und eine $CO_2$-Einheit abgeleitet ist und somit mindestens eine Formaldehyd- und eine $CO_2$-Einheit enthält.

Weiterhin wurden im ESI-Massenspektrum folgende Massensignale identifiziert:

*m/z* =

745,1539 $[(CH_2O)_{18}(CO_2)_4CHO^+$, ber.: 745,1522],

715,1431 $[(CH_2O)_{17}(CO_2)_4CHO^+$, ber.: 715,1417],

685,1324 $[(CH_2O)_{16}(CO_2)_4CHO^+$, ber.: 685,1311],

655,1216 $[(CH_2O)_{15}(CO_2)_4CHO^+$, ber.: 655,1205],

625,1110 $[(CH_2O)_{14}(CO_2)_4CHO^+$, ber.: 625,1110],

595,1002 $[(CH_2O)_{13}(CO_2)_4CHO^+$, ber.: 595,0994],

565,0896 $[(CH_2O)_{12}(CO_2)_4CHO^+$, ber.: 565,0888],

535,0788 $[(CH_2O)_{11}(CO_2)_4CHO^+$, ber.: 535,0783].

Die erhaltenen hochaufgelösten Massensignale zeigen, dass nicht-alternierende Formaldehyd/$CO_2$-Copolymere mit einem Verhältnis Formaldehyd : $CO_2$ >1:1 vorliegen.

Beispiel 2: Herstellung eines Formaldehyd/$CO_2$-Copolymers mit Paraformaldehyd, Sn-Kat. 1 (DBTL) und Base 1 (Cäsiumcarbonat)

In einem 200 ml Reaktor aus Edelstahl wurden 15,12 g (entsprechend 0,504 mol Formaldehyd-Äquivalenten) Paraformaldehyd (Aldrich), 1,63 g (4,99 mmol) Base 1 ($CS_2CO_3$) und 30,0 mg (0,047 mmol) Sn-Kat. 1 (DBTL) vorgelegt. Dann wurden 40 ml 1,4-Dioxan zugegeben. Anschließend wurde 10 bar (absolut) Kohlendioxid aufgepresst und das Reaktionsgemisch auf 120 °C erwärmt. Nach Erreichen der Temperatur von 120 °C wurde der Überdruck mit Kohlendioxid auf 30 bar (absolut) eingestellt und das Reaktionsgemisch bei 500 U/min mit einem Gaseintragsrührer 16 h bei 120 °C gerührt. Nach Abkühlen auf 25 °C wurde der Überdruck abgelassen. Es wurde ein Zwei-PhasenGemisch erhalten. Die überstehende, niederviskose Phase wurde entfernt und die viskose Produktphase bei $2 \times 10^{-3}$ bar für drei Stunden getrocknet. Es wurden 6,85 g eines viskosen, braunen Öls erhalten.

Im Gegensatz zum Ausgangsmaterial Paraformaldehyd ist das Produkt löslich in DMF und DMSO.

OH-Zahl: 157,9 $mg_{KOH}$/g. Dies entspricht einem Äquivalent-Gewicht von 355,4 g/mol OH.

IR: $\nu$ = 3320 (b, w, v[OH]), 2894 (w, v[$CH_2$]), 1766 (vw, v[C=O]), 1716 (w), 1590 (w), 1408 (vw), 1351 (vw), 1292 (vw), 1255 (vw), 1116 (w), 1033 (m), 869 (w), 613 (w) cm$^{-1}$.

$^1$H-NMR (400 MHz, DMSO-d[6]): $\delta$ = 1,82 (s, 0,008 H), 1,98- (m, 0,009 H), 2,10-2,15 (m, 0,011 H), 3,16 (s, 0,034 H), 3,31 (s, 0,092 H), 3,40 - 3,54 (m, 1,00 H), 4,04 (s, 0,012 H), 4,06 (s, 0,018 H), 4,16 (s, 0,014 H), 4,18 (s, 0,013 H), 4,35 (s, 0,030 H), 4,59 (bs, 0,637 H), 8,17 (s, 0,001 H), 8,44 (bs, 0,014 H) ppm.

$^{13}$C-APT-NMR (125 MHz, DMSO-d[6]): $\delta$ = 48,9 (+), 49,8 (+), 60,0 (+), 60,4 (+), 61,6 (+), 62,1 (+), 63,08 (+), 64,2 (+), 64,6 (+), 66,6 (+), 68,4 (-), 68,6 70,3 (-), 70,5 (-), 72,5 (-), 74,7 (+), 76,7 (-), 167,1 (-), 176,3 (+), 177,5 (+) ppm.

Die Beispiele 1 und 2 zeigen, dass während der Reaktion eine Umpolymerisierung des unlöslichen Paraformaldehyds zu einem löslichen, oligomerem Produkt stattfand. Im IR-Spektrum des Produktes wurden weder die typischen Signale bei 1236, 1089, 904, 629 und 453 $cm^{-1}$ für Paraformaldehyd noch bei 1716, 1328, 876 und 673 $cm^{-1}$ für Cäsiumcarbonat beobachtet.

Der Einbau von $CO_2$ in das Polymer wurde durch das charakteristische Signal im IR-Spektrum bei 1772 $cm^{-1}$ (Beispiel 1) beziehungsweise 1766 $cm^{-1}$ (Beispiel 2) sowie die charakteristischen Signale im $^{13}C$-APT-NMR Spektrum bei $\delta$ = 175,3, 175,5 (+, $C_{quart.}$, Beispiel 1) beziehungsweise 176,3, 177,5 (+, $C_{quart.}$, Beispiel 2) nachgewiesen. Das Auftreten mehrerer Signale im $^{13}C$-NMR-Spektrum weist auf eine variable Umgebung für die eingebauten $CO_2$-Gruppen und somit ein nicht-alternierendes Polymer hin. Über HMBC-NMR-Spektroskopie und HSQC-NMR-Spektroskopie wurde für Beispiel 1 nachgewiesen, dass das quarternäre Signal bei $\delta$ = 175,3 ppm im $^{13}C$-NMR-Spektrum über Fernkopplungen mit einer Sequenz in Verbindung steht, die aus drei voneinander unterschiedlichen Methylengruppen besteht. Dies ist ein Beleg dafür, dass ein nicht-alternierendes Copolymer vorliegt.

Weiterhin belegt das ESI-MS-Spektrum in Beispiel 1 das Vorliegen von Oligomeren mit unterschiedlichen Gehalten an $CO_2$-Einheiten ($\Delta m$ = 43,98983 amu) und $CH_2O$-Einheiten ($\Delta m$ = 30,01056 amu). Ferner zeigt die elementare Zusammensetzung der Massensignale, dass ein nicht-alternierendes Formaldehyd/$CO_2$-Polymer vorliegt.

Die OH-Zahl in Beispiel 2 sowie die breite OH-Bande bei 3321 $cm^{-1}$ (Beispiel 1) beziehungsweise 3320 $cm^{-1}$ (Beispiel 2) im IR-Spektrum zeigen das Vorhandensein terminaler OH-Gruppen, welches den Einsatz des Produktes als Polyol-Baustein in Polyurethanen ermöglicht.

Beispiel 3: Herstellung eines acylierten Formaldehyd/$CO_2$-Copolymers mit Paraformaldehyd, Sn-Kat. 1 (DBTL) und Base 1 (Cäsiumcarbonat) (Verhältnis Base : Formaldehyd-Äquivalente = 1:94)

In einem 200 ml Reaktor aus Edelstahl wurden 15,15 g (entsprechend 0,504 mol Formaldehyd-Äquivalenten) Paraformaldehyd (Aldrich), 1,74 g (5,34 mmol) Base 1 ($Cs_2CO_3$) und 10,1 mg (0,016 mmol) Sn-Kat. 1 (DBTL) vorgelegt. Dann wurden 40 ml 1,4-Dioxan zugegeben. Anschließend wurde 10 bar (absolut) Kohlendioxid aufgepresst und das Reaktionsgemisch auf 120 °C erwärmt. Nach Erreichen der Temperatur von 120 °C wurde der Überdruck mit Kohlendioxid auf 30 bar (absolut) eingestellt und das Reaktionsgemisch bei 500 U/min mit einem Gaseintragsrührer 16 h bei 120 °C gerührt. Nach Abkühlen auf 25 °C wurden bei einer Flussrate von 1 ml/min mit einer HPLC-Pumpe unter Rühren 30 ml Essigsäureanhydrid zudosiert. Nach vollendeter Zugabe wurde das Reaktionsgemisch unter Rühren bei 500 U/min auf 60 °C erwärmt und 3 h bei 60 °C gerührt. Im Anschluss wurde der Reaktor auf 25 °C abgekühlt und der Überdruck abgelassen. Das erhaltene farblose homogene Produktgemisch wurde in ein Becherglas überführt und tropfenweise mit gesättigter Natriumcarbonat-Lösung versetzt, bis ein pH-Wert der Lösung > 7 erreicht wurde. Das so erhaltene Gemisch wurde in einen Scheidetrichter überführt und das Produkt mit 4 × 50 ml Dichlormethan extrahiert. Nach Entfernen der flüchtigen Bestandteile unter Vakuum wurden als Rückstand 9.95 g eines hellgelben Öles erhalten.

Im Gegensatz zum Ausgangsmaterial Paraformaldehyd ist das Produkt löslich in Dichlormethan und Chloroform.

Viskosität: 0.292 Pa·s

Über Gel-Permeations-Chromatographie (GPC) gegen Polystrol-Standards mit Chloroform als Eluent wurde ein mittleres Molekulargewicht $M_n$ = 644 g/mol und ein Polydispersitätsindex PDI = 1,23 ermittelt.

IR: $v$ = 3481 (b, w, v[OH]), 2959 (w, v[$CH_2$]), 2904 (w, v[$CH_2$]), 1737 (s, v[C=O]), 1466 (w), 1432 (w), 1368 (m), 1224 (s), 1197 (s), 1158 (m), 1112 (m), 1043 (m), 1010 (s), 946 (s), 834 (w), 605 (w), 515 (vw) $cm^{-1}$.

$^{1}H$-NMR (400 MHz, $CDCl_3$): $\delta$ = 1,80 (bs, 1,00 H, $CH_3$), 1,81 (bs, 0,81 H, $CH_3$), 3,08 (s, 0,091 H), 3,09 (s, 0,065 H), 3,16 - 4,23 (m, 1,26 H), 4,31 - 4,69 (m, 0,47 H, O-$CH_2$-O), 4,84 - 5,20 (m, 0,63 H, O-$CH_2$-O), 5,42 (s, 0,12 H, O-$CH_2$-O) ppm.

$^{13}C$-APT-NMR (400 MHz, $CDCl_3$): $\delta$ = 19,9 (-, $CH_3$), 20,0 (-, $CH_3$), 20,2 (-, $CH_3$), 55,1 (-), 64,2 (+), 70,1 (+), 70,4 (+), 71,5 (+), 72,0 (+), 75,1 (+), 77,1 (+), 78,6 (+,O-$CH_2$-O), 84,6 (+, O-$CH_2$-O), 84,9 (+, O-$CH_2$-O), 86,3 (+, O-$CH_2$-O), 88,1 (+, O-$CH_2$-O), 88,5 (+, O-$CH_2$-O), 89,6 (+, O-$CH_2$-O), 90,1 (+, O-$CH_2$-O), 92,9 (+, O-$CH_2$-O), 94,5 (+, O-$CH_2$-O), 169,0 (+, C=O), 169,5 (+,C=O), 169,8 (+,C=O), 169,8 (+,C=O), 170,0 (+,C=O), 170,1 (+, C=O) ppm.

ESI-MS (FTMS + p ESI): Im ESI-Massenspektrum wurden als Signalreihen mit der größten Signalintensität die nachfolgend genannten Signalreihen identifiziert, die der folgenden allgemeinen Summenformel zugeordnet werden:

$$[H_3CCOO(CH_2O)_x(CO_2)_yCOCH_3] + H^+$$

Reihe 1 (y = 2): $m/z$ (%) [x $CH_2O$] = 431,15155 (1,05) [8 $CH_2O$], 461,16241 (1,16) [9 $CH_2O$], 491,17294 (1,46) [10 $CH_2O$], 521,18341 (1,61) [11 $CH_2O$], 551,19348 (1,13) [12 $CH_2O$], 581,20441 (1,21) [13 $CH_2O$].

Reihe 2 (y = 3): $m/z$ (%) [x $CH_2O$] = 415,12067 (12,38) [6 $CH_2O$], 445,13120 (39,65) [7 $CH_2O$], 475,14169 (79,80)

[8 CH$_2$O], 505,15222 (100) [9 CH$_2$O], 535,16284 (8318) [10 CH$_2$O], 565,17352 (45,87) [11 CH$_2$O], 595,18427 (20,73) [12 CH$_2$O], 625,19482 (7,72) [13 CH$_2$O].

Reihe 3 (y = 4): *m/z* (%) [x CH$_2$O] = 489,12057 (0,64) [7 CH$_2$O], 519,13129 (0,92) [8 CH$_2$O], 549,14221 (0,85) [9 CH$_2$O].

Die Verlängerung der Kette in Reihe 1 um eine CO$_2$-Einheit führt zu Reihe 2 ($\Delta$m = 43,98981 amu, berechn.: $\Delta$m(CO$_2$) = 43,98983 amu). Die Verlängerung von Reihe 2 um eine CO$_2$-Einheit führt zu Reihe 3 ($\Delta$m = 43,98999 amu, berechn.: $\Delta$m(CO$_2$) = 43,98983 amu).

Somit wird Reihe 1 einem nicht-alternierenden Formaldehyd/CO$_2$-Copolymer mit 2 CO$_2$-Einheiten und 8 bis 13 Formaldehyd-Einheiten, Reihe 2 einem nicht-alternierenden Formaldehyd/CO$_2$-Copolymer mit 3 CO$_2$-Einheiten und 6 bis 13 Formaldehyd-Einheiten und Reihe 3 einem Formaldehyd-CO$_2$-Copolymer mit 4 CO$_2$-Einheiten und 7 bis 9 Formaldehyd-Einheiten zugeordnet. Das intensivste Signal im ESI-Massenspektrum wurde einem Formaldehyd/CO$_2$-Copolymer mit 3 CO$_2$-Einheiten und 9 Formaldehyd-Einheiten zugeordnet.

Das relative Verhältnis von Formaldehyd-Einheiten zu CO$_2$-Einheiten ist somit in allen Ketten > 1:1, womit das Vorliegen nicht-alternierender Formaldehyd/CO$_2$-Copolymere zweifelsfrei bewiesen ist.

Beispiel 4: Herstellung eines acylierten Formaldehyd/CO$_2$-Copolymers mit Paraformaldehyd, Sn-Kat. 1 (DBTL) und Base 1 (Cäsiumcarbonat) (Verhältnis Base : Formaldehyd-Äquivalente = 1 : 199)

In einem 200 ml Reaktor aus Edelstahl wurden 15,09 g (entsprechend 0,502 mol Formaldehyd-Äquivalenten) Paraformaldehyd (Acros Organics), 0,82 g (2,52 mmol) Base 1 (CS$_2$CO$_3$) und 10,2 mg (0,016 mmol) Sn-Kat.1 (DBTL) vorgelegt. Dann wurden 40 ml 1,4-Dioxan zugegeben. Anschließend wurde 10 bar (absolut) Kohlendioxid aufgepresst und das Reaktionsgemisch auf 120 °C erwärmt. Nach Erreichen der Temperatur von 120 °C wurde der Überdruck auf 30 bar (absolut) eingestellt und das Reaktionsgemisch bei 423 U/min mit einem Gaseintragsrührer 16 h bei 120 °C gerührt. Nach Abkühlen auf 25 °C wurden bei einer Flussrate von 5 ml/min mit einer HPLC-Pumpe unter Rühren 30 ml Essigsäureanhydrid zudosiert. Nach vollendeter Zugabe wurde das Reaktionsgemisch unter Rühren bei 500 U/min auf 60 °C erwärmt und 3 h bei 60 °C gerührt. Im Anschluss wurde der Reaktor auf 25 °C abgekühlt und der Überdruck abgelassen. Es wurde ein farbloses homogenes Gemisch erhalten. Das erhaltene Produktgemisch wurde in ein Becherglas überführt und tropfenweise mit gesättigter Natriumcarbonat-Lösung versetzt, bis ein pH-Wert der Lösung > 7 erreicht wurde. Das so erhaltene Gemisch wurde mit 4$\times$ 50 ml Dichlormethan extrahiert. Nach Entfernen der flüchtigen Bestandteile unter Vakuum wurden 14,82 g eines farblosen Öls mit farblosen Feststoffpartikeln erhalten.

Im Gegensatz zum Ausgangsmaterial Paraformaldehyd ist das Produkt löslich in Dichlormethan und Chloroform.

Über Gel-Permeations-Chromatographie (GPC) gegen Polystrol-Standards mit Chloroform als Eluent wurde ein mittleres Molekulargewicht M$_n$ = 796 g/mol und ein Polydispersitätsindex PDI = 1,24 ermittelt.

IR: v = 3487 (b, vw, v[OH]), 2973 (w, v[CH$_2$]), 2913 (w, v[CH$_2$]), 1743 (m, v[C=O]), 1467 (w), 1419 (w), 1369 (w), 1225 (m), 1197 (m), 1108 (m), 1045 (w), 1006 (m), 910 (vs), 833 (w), 606 (w), 534 (vw), 455 (vw) cm$^{-1}$.

$^1$H-NMR (400 MHz, CDCl$_3$):_$\delta$ = 1,99 - 2,03 (m, 1,00 H, CH$_3$), 3,29 (s, 0,17 H), 3,51 - 3,87 (m, 0,22 H), 4,63 (s, 0,11 H, O-CH$_2$-O), 4,66 (s, 0,02 H, O-CH$_2$-O), 4,70 - 4,85 (m, 0,74 H, O-CH$_2$-O), 5,12 - 5,29 (m, 0,45 H, O-CH$_2$-O), 5,62 (s, 0,08 H, O-CH$_2$-O) ppm.

$^{13}$C-APT-NMR (400 MHz, CDCl$_3$): $\delta$ = 20,6 (-, CH$_3$), 20,8 (-, CH$_3$), 55,7 (-), 55,8 (-), 79,1 (+, O-CH2-O), 85,0 (+, O-CH$_2$-O), 85,4 (+, O-CH$_2$-O), 86,8 (+, O-CH$_2$-O), 88,7 (+, O-CH$_2$-O), 89,1 (+, O-CH$_2$-O), 90,1 (+, O-CH$_2$-O), 90,6 (+, O-CH$_2$-O), 92,3 (+, O-CH$_2$-O), 93,5 (+, O-CH$_2$-O), 95,0 (+, O-CH$_2$-O), 169,6 (+, C=O), 170,1 (+, C=O) ppm.

ESI-MS (FTMS + p ESI): Im ESI-Massenspektrum wurden die nachfolgend genannten Signalreihen identifiziert, die der folgenden allgemeinen Summenformel zugeordnet werden können:

$$[H_3CCOO(CH_2O)_x(CO_2)_yCOCH_3] + H^+$$

Reihe 1 (y = 1): *m/z* (%) [x CH$_2$O] = 387,12 (2,90) [8 CH$_2$O], 417,13 (5,32) [9 CH$_2$O], 447,14 (6,76) [10 CH$_2$O], 477,15 (10,40) [11 CH$_2$O], 507,16 (9,07) [12 CH$_2$O], 537,17 (10,62) [13 CH$_2$O], 567,18 (11,18) [14 CH$_2$O], 597,19 (11,38) [15 CH$_2$O], 627,21 (11,00) [16 CH$_2$O], 657,22 (9,39) [17 CH$_2$O], 687,23 (7,88) [18 CH$_2$O], 717,24 (5,34) [19 CH$_2$O], 747,25 (4,26) [20 CH$_2$O], 777,26 (3,18) [21 CH$_2$O].

Reihe 2 (y = 2): *m/z* (%) [x CH$_2$O] = 341,08 (1,33) [5 CH$_2$O], 371,09 (4,89) [6 CH$_2$O], 401,10 (12,07) [7 CH$_2$O], 431,11 (18,45) [8 CH$_2$O], 461,12 (24,03) [9 CH$_2$O], 491,13 (26,81) [10 CH$_2$O], 521,14 (27,46) [11 CH$_2$O], 551,15 (24,41) [12 CH$_2$O], 581,16 (21,62) [13 CH$_2$O], 611,17 (18,81[14 CH$_2$O]), 641,19 (16,80) [15 CH$_2$O], 671,20 (14,39)

[16 CH$_2$O], 701,21 (12,01) [17 CH$_2$O], 731,22 (9,45) [18 CH$_2$O], 761,23 (7,17) [19 CH$_2$O], 791,24 (5,29) [20 CH$_2$O], 821,25 (3,67) [21 CH$_2$O].

Reihe 3 (y = 3): *m/z* (%) [x CH$_2$O] = 385,11 (5,93) [5 CH$_2$O], 415,12 (15,92) [6 CH$_2$O], 445,13 (30,97) [7 CH$_2$O], 475,13 (30,97) [8 CH$_2$O], 505,15 (57,53) [9 CH$_2$O], 535,16 (72,55) [10 CH$_2$O], 565,17 (88,46) [11 CH$_2$O], 595,18 (99,41) [12 CH$_2$O], 625,19 (99,78) [13 CH$_2$O], 655,20 (100,0) [14 CH$_2$O], 685,21 (96,90) [15 CH$_2$O], 715,22 (80,16) [16 CH$_2$O], 745,23 (71,63) [17 CH$_2$O], 775,24 (55,02) [18 CH$_2$O], 805,25 (43,09) [19 CH$_2$O], 835,26 (32,39) [20 CH$_2$O], 865,27 (23,48) [21 CH$_2$O], 895,29 (17,22) [22 CH$_2$O], 925,30 (10,99) [23 CH$_2$O], 955,31 (6,73) [24 CH$_2$O], 985,32 (4,91) [25 CH$_2$O], 1015,33 (2,82) [26 CH$_2$O].

Reihe 4 (y = 4): *m/z* (%) [x CH$_2$O] = 459,14 (5,00) [6 CH$_2$O], 489,15 (8,67) [7 CH$_2$O], 519,16 (10,59) [8 CH$_2$O], 549,17 (11,61) [9 CH$_2$O], 579,19 (13,85) [10 CH$_2$O], 609,20 (16,50) [11 CH$_2$O], 639,21 (17,48) [12 CH$_2$O], 669,22 (19,06) [13 CH$_2$O], 699,23 (19,24) [14 CH$_2$O], 729,24 (17,46) [15 CH$_2$O], 759,25 (15,88) [16 CH$_2$O], 789,2 6 (14,16) [17 CH$_2$O], 819,27 (11,49) [18 CH$_2$O], 849,28 (8,21) [19 CH$_2$O], 879,29 (7,79) [20 CH$_2$O], 909,31 (5,16) [21 CH$_2$O], 939,31 (3,12) [22 CH$_2$O], 969,32 (2,42) [23 CH$_2$O].

Somit wird Reihe 1 einem nicht-alternierenden Formaldehyd/CO$_2$-Copolymer mit einer CO$_2$-Einheit und 8 bis 21 Formaldehyd-Einheiten, Reihe 2 einem nicht-alternierenden Formaldehyd/CO$_2$-Copolymer mit 2 CO$_2$-Einheiten und 5 bis 21 Formaldehyd-Einheiten, Reihe 3 einem nicht-alternierenden Formaldehyd/CO$_2$-Copolymer mit 3 CO$_2$-Einheiten und 5 bis 26 Formaldehyd-Einheiten und Reihe 4 einem Formaldehyd-CO$_2$-Copolymer mit 4 CO$_2$-Einheiten und 6 bis 23 Formaldehyd-Einheiten zugeordnet. Das intensivste Signal im ESI-Massenspektrum wurde einem Formaldehyd/CO$_2$-Copolymer mit 3 CO$_2$-Einheiten und 14 Formaldehyd-Einheiten zugeordnet.

Das relative Verhältnis von Formaldehyd-Einheiten zu CO$_2$-Einheiten ist somit in allen Ketten > 1:1, womit das Vorliegen nicht-alternierender Formaldehyd/CO$_2$-Copolymere zweifelsfrei bewiesen ist.

Beispiel 5: Herstellung eines acylierten Formaldehyd/CO$_2$-Copolymers mit Paraformaldehyd, Sn-Kat. 1 (DBTL) und Base 1 (Cäsiumcarbonat) (Verhältnis Base : Formaldehvd-Äquivalente = 1:49)

In einem 200 ml Reaktor aus Edelstahl wurden 15,11 g (entsprechend 0,503 mol Formaldehyd-Äquivalenten) Paraformaldehyd (Acros Organics), 3,31 g (10,2 mmol) Base 1 (CS$_2$CO$_3$) und 10,1 mg (0,016 mmol) Sn-Kat. 1 (DBTL) vorgelegt. Dann wurden 40 ml 1,4-Dioxan zugegeben. Anschließend wurde 10 bar (absolut) Kohlendioxid aufgepresst und das Reaktionsgemisch auf 120 °C erwärmt. Nach Erreichen der Temperatur von 120 °C wurde der Überdruck auf 30 bar (absolut) eingestellt und das Reaktionsgemisch bei 425 U/min mit einem Gaseintragsrührer 16 h bei 120 °C gerührt. Nach Abkühlen auf 25 °C wurden bei einer Flussrate von 5 ml/min mit einer HPLC-Pumpe unter Rühren 30 ml Essigsäureanhydrid zudosiert. Nach vollendeter Zugabe wurde das Reaktionsgemisch unter Rühren bei 425 U/min auf 60 °C erwärmt und 3 h bei 60 °C gerührt. Im Anschluss wurde der Reaktor auf 25 °C abgekühlt und der Überdruck abgelassen. Es wurde ein hellgelbes homogenes Gemisch erhalten. Das erhaltene Produktgemisch wurde in ein Becherglas überführt und tropfenweise mit gesättigter Natriumcarbonat-Lösung versetzt, bis ein pH-Wert der Lösung > 7 erreicht wurde. Das so erhaltene Gemisch wurde mit insgesamt 300 ml Dichlormethan extrahiert. Nach Entfernen der flüchtigen Bestandteile unter Vakuum wurden 11,50 g eines hellgelben Öls mit farblosen Feststoffpartikeln erhalten.

Im Gegensatz zum Ausgangsmaterial Paraformaldehyd ist das Produkt löslich in Dichlormethan und Chloroform.

Über Gel-Permeations-Chromatographie (GPC) gegen Polystrol-Standards mit Chloroform als Eluent wurde ein mittleres Molekulargewicht $M_n$ = 725 g/mol und ein Polydispersitätsindex PDI = 1,24 ermittelt.

IR: v = 3498 (b, vw, v[OH]), 2959 (w, v[CH$_2$]), 2906 (w, v[CH$_2$]), 1742 (m, v[C=O]), 1467 (w), 1418 (w), 1369 (w), 1225 (m), 1197 (m), 1108 (m), 1045 (w), 1007 (m), 916 (s), 833 (w), 606 (w), 537 (vw), 444 (vw) cm$^{-1}$.

$^1$H-NMR (400 MHz, CDCl$_3$):_ δ = 1,99 - 2,02 (m, 1,00 H, CH$_3$), 3,28 - 3,30 (m, 0,27 H), 4,61 - 4,64 (m, 0,16 H, O-CH$_2$-O), 4,66 (s, 0,03 H, O-CH$_2$-O), 4,76 - 4,85 (m, 0,48 H, OCH$_2$-O), 5,17 - 5,27 (m, 0,32 H, O-CH$_2$-O), 5,63 (s, 0,09 H, O-CH$_2$-O) ppm. $^{13}$C-APT-NMR (400 MHz, CDCl$_3$): δ = 20,6 (-, CH$_3$), 20,8 (-, CH$_3$), 55,7 (-), 55,9 (-), 79,1 (+, O-CH$_2$-O), 85,4 (+, O-CH$_2$-O), 86,8 (+, O-CH$_2$-O), 88,6 (+, O-CH$_2$-O), 88,7 (+, O-CH$_2$-O), 88,7 (+, O-CH$_2$-O), 89,0 (+, O-CH$_2$-O), 89,1 (+, O-CH$_2$-O), 90,1 (+, O-CH$_2$-O), 90,5 (+, O-CH$_2$-O), 92,3 (+, O-CH$_2$-O), 93,5 (+, O-CH$_2$-O), 95,0 (+, O-CH$_2$-O), 169,5 (+, C=O), 170,0 (+, C=O) ppm.

ESI-MS (FTMS + p ESI): Im ESI-Massenspektrum wurden die nachfolgend genannten Signalreihen identifiziert, die der folgenden allgemeinen Summenformel zugeordnet werden können:

$$[H_3CCOO(CH_2O)_x(CO_2)_yCOCH_3] + H^+$$

Reihe 1 (y = 1): *m/z* (%) [x $CH_2O$] = 357,11 (4,22) [7 $CH_2O$], 387,12 (6,77) [8 $CH_2O$], 417,13 (10,16) [9 $CH_2O$], 447,14 (15,49) [10 $CH_2O$], 477,15 (25,68) [11 $CH_2O$], 507,16 (14,65) [12 $CH_2O$], 537,18 (14,47) [13 $CH_2O$], 567,19 (13,08) [14 $CH_2O$], 597,20 (11,38) [15 $CH_2O$], 627,21 (9,28) [16 $CH_2O$], 657,22 (7,55) [17 $CH_2O$], 687,23 (5,41) [18 $CH_2O$], 717,24 (3,60) [19 $CH_2O$].

Reihe 2 (y = 2): *m/z* (%) [x $CH_2O$] = 341,08 (1,74) [5 $CH_2O$], 371,09 (5,29) [6 $CH_2O$], 401,10 (8,97) [7 $CH_2O$], 431,11 (16,75) [8 $CH_2O$], 461,12 (17,92) [9 $CH_2O$], 491,13 (19,85) [10 $CH_2O$], 521,14 (18,00) [11 $CH_2O$], 551,15 (15,04) [12 $CH_2O$], 581,17 (11,60) [13 $CH_2O$], 611,18 (8,82) [14 $CH_2O$], 641,19 (6,46) [15 $CH_2O$], 671,20 (5,02) [16 $CH_2O$], 701,21 (3,55) [17 $CH_2O$].

Reihe 3 (y = 3): *m/z* (%) [x $CH_2O$] = 385,11 (11,17) [5 $CH_2O$], 415,12 (30,37) [6 $CH_2O$], 445,13 (65,45) [7 $CH_2O$], 475,14 (78,67) [8 $CH_2O$], 505,15 (100) [9 $CH_2O$], 535,16 (95,78) [10 $CH_2O$], 565,17 (84,58) [11 $CH_2O$], 595,18 (66,99) [12 $CH_2O$], 625,19 (52,93) [13 $CH_2O$], 655,20 (41,00) [14 $CH_2O$], 685,21 (31,33) [15 $CH_2O$], 715,22 (22,64) [16 $CH_2O$], 745,23 (15,35) [17 $CH_2O$], 775,24 (9,87) [18 $CH_2O$], 805,26 (5,99) [19 $CH_2O$].

Reihe 4 (y = 4): *m/z* (%) [x $CH_2O$] = 459,14 (13,39) [6 $CH_2O$], 489,15 (18,32) [7 $CH_2O$], 519,17 (20,79) [8 $CH_2O$], 549,18 (22,84) [9 $CH_2O$], 579,19 (24,54) [10 $CH_2O$], 609,20 (24,31) [11 $CH_2O$], 639,21 (23,66) [12 $CH_2O$], 669,22 (21,77) [13 $CH_2O$], 699,23 (18,57) [14 $CH_2O$], 729,24 (14,84) [15 $CH_2O$], 759,25 (11,47) [16 $CH_2O$], 789,26 (8,04) [17 $CH_2O$], 819,27 (5,35) [18 $CH_2O$].

Somit kann Reihe 1 einem nicht-alternierenden Formaldehyd/$CO_2$-Copolymer mit einer $CO_2$-Einheit und 7 bis 19 Formaldehyd-Einheiten, Reihe 2 einem nicht-alternierenden Formaldehyd/$CO_2$-Copolymer mit 2 $CO_2$-Einheiten und 5 bis 17 Formaldehyd-Einheiten, Reihe 3 einem nicht-alternierenden Formaldehyd/$CO_2$-Copolymer mit 3 $CO_2$-Einheiten und 5 bis 19 Formaldehyd-Einheiten und Reihe 4 einem Formaldehyd-$CO_2$-Copolymer mit 4 $CO_2$-Einheiten und 6 bis 18 Formaldehyd-Einheiten zugeordnet werden. Das intensivste Signal im ESI-Massenspektrum wurde einem Formaldehyd/$CO_2$-Copolymer mit 3 $CO_2$-Einheiten und 9 Formaldehyd-Einheiten zugeordnet.

Das relative Verhältnis von Formaldehyd-Einheiten zu $CO_2$-Einheiten ist somit in allen Ketten > 1:1, womit das Vorliegen nicht-alternierender Formaldehyd/$CO_2$-Copolymere zweifelsfrei bewiesen ist.

Beispiel 6: Herstellung eines acylierten Formaldehyd/$CO_2$-Copolymers mit Paraformaldehyd, Sn-Kat. 1 (DBTL) und Base 1 (Cäsiumcarbonat) (Verhältnis Base : Formaldehyd-Äquivalente = 1:20)

In einem 200 ml Reaktor aus Edelstahl wurden 15,00 g (entsprechend 0,500 mol Formaldehyd-Äquivalenten) Paraformaldehyd (Acros Organics), 8,20 g (25,2 mmol) Base 1 ($Cs_2CO_3$) und 10,2 mg (0,016 mmol) Sn-Kat. 1 (DBTL) vorgelegt. Dann wurden 40 ml 1,4-Dioxan zugegeben. Anschließend wurde 10 bar (absolut) Kohlendioxid aufgepresst und das Reaktionsgemisch auf 120 °C erwärmt. Nach Erreichen der Temperatur von 120 °C wurde der Überdruck auf 30 bar (absolut) eingestellt und das Reaktionsgemisch bei 431 U/min mit einem Gaseintragsrührer 16h bei 120 °C gerührt. Nach Abkühlen auf 25 °C wurden bei einer Flussrate von 5 ml/min mit einer HPLC-Pumpe unter Rühren 30 ml Essigsäureanhydrid zudosiert. Nach vollendeter Zugabe wurde das Reaktionsgemisch unter Rühren bei 431 U/min auf 60 °C erwärmt und 3 h bei 60 °C gerührt. Im Anschluss wurde der Reaktor auf 25 °C abgekühlt und der Überdruck abgelassen. Es wurde ein farbloses inhomogenes Gemisch bestehend aus einer farblosen Flüssigkeit und farblosen Feststoffpartikeln erhalten. Das erhaltene Produktgemisch wurde in ein Becherglas überführt und tropfenweise mit gesättigter Natriumcarbonat-Lösung versetzt, bis ein pH-Wert der Lösung > 7 erreicht wurde. Das so erhaltene Gemisch wurde mit Dichlormethan extrahiert. Nach Entfernen der flüchtigen Bestandteile unter Vakuum wurden 10,58 g eines farblosen Öls mit farblosen Feststoffpartikeln erhalten.

Im Gegensatz zum Ausgangsmaterial Paraformaldehyd ist das Produkt löslich in Dichlormethan und Chloroform.

Über Gel-Permeations-Chromatographie (GPC) gegen Polystrol-Standards mit Chloroform als Eluent wurde ein mittleres Molekulargewicht $M_n$ = 716 g/mol und ein Polydispersitätsindex PDI = 1,30 ermittelt.

IR: v = 3480 (b, vw, v[OH]), 2970 (w, v[$CH_2$]), 2913 (w, v[$CH_2$]), 1744 (m, v[C=O]), 1575 (vw), 1467 (w), 1425 (w), 1369 (w), 1225 (m), 1197 (m), 1108 (m), 1044 (w), 1007 (m), 913 (s), 833 (w), 606 (w), 533 (vw), 457 (vw) cm$^{-1}$.
$^1$H-NMR (400 MHz, $CDCl_3$ δ = 2,00 - 2,03 (m, 1,00 H, $CH_3$), 3,29 - 3,32 (m, 0,40 H), 4,62 - 4,65 (m, 0,23 H, O-$CH_2$-O), 4,67 (s, 0,05 H, O-$CH_2$-O), 4,77 - 4,86 (m, 0,57 H, O$CH_2$-O), 5,18 - 5,29 (m, 0,35 H, O-$CH_2$-O), 5,64 (s, 0,09 H, O-$CH_2$-O) ppm.

$^{13}$C-APT-NMR (400 MHz, $CDCl_3$): δ = 20,6 (-, $CH_3$), 20,9 (-, $CH_3$), 55,7 (-), 55,8 (-), 79,1 (+, O-$CH_2$-O), 85,1 (+, O-$CH_2$-O), 85,5 (+, O-$CH_2$-O), 86,8 (+, O-$CH_2$-O), 88,7 (+, O-$CH_2$-O), 89,1 (+, O-$CH_2$-O), 90,1 (+, O-$CH_2$-O), 90,6 (+, O-$CH_2$-O), 93,5 (+, O-$CH_2$-O), 95,00 (+, O-$CH_2$-O), 169,6 (+, C=O), 170,3 (+, C=O), 170,3 (+, C=O) ppm.

ESI-MS (FTMS + p ESI): Im ESI-Massenspektrum wurden die nachfolgend genannten Signalreihen identifiziert, die der folgenden allgemeinen Summenformel zugeordnet werden können:

$$[H_3CCOO(CH_2O)_x(CO_2)_yCOCH_3] + H^+$$

Reihe 1 (y = 1): *m*/z (%) [x $CH_2O$] = 357,11 (0,63) [7 $CH_2O$], 387,12 (3,25) [8 $CH_2O$], 417,13 (10,34) [9 $CH_2O$], 447,14 (17,12) [10 $CH_2O$], 477,15 (22,51) [11 $CH_2O$], 507,16 (22,09) [12 $CH_2O$], 537,17 (20,09) [13 $CH_2O$], 567,18 (16,04) [14 $CH_2O$], 597,20 (10,19) [15 $CH_2O$], 627,21 (6,66) [16 $CH_2O$], 657,22 (4,62) [17 $CH_2O$], 687,23 (2,21) [18 $CH_2O$].

Reihe 2 (y = 2): *m*/z (%) [x $CH_2O$] = 401,10 (2,90) [7 $CH_2O$], 431,11 (6,82) [8 $CH_2O$], 461,12 (10,31) [9 $CH_2O$], 491,13 (11,45) [10 $CH_2O$], 491,13 (11,45) [11 $CH_2O$], 521,14 (9,45) [12 $CH_2O$], 551,15 (6,60) [13 $CH_2O$], 581,16 (4,23) [14 $CH_2O$], 611,17 (2,24) [15 $CH_2O$].

Reihe 3 (y = 3): *m*/z (%) [x $CH_2O$] = 385,11 (1,55) [5 $CH_2O$], 415,12 (5,77) [6 $CH_2O$], 445,13 (24,39) [7 $CH_2O$], 475,14 (51,52) [8 $CH_2O$], 505,15 (79,51) [9 $CH_2O$], 535,16 (71,81) [10 $CH_2O$], 565,17 (60,62) [11 $CH_2O$], 595,18 (38,20) [12 $CH_2O$], 625,19 (23,80) [13 $CH_2O$], 655,20 (14,37) [14 $CH_2O$], 685,21 (7,29) [15 $CH_2O$], 715,22 (4,04) [16 $CH_2O$], 745,23 (1,79) [17 $CH_2O$], 775,24 (0,87) [18 $CH_2O$].

Reihe 4 (y = 4): *m*/z (%) [x $CH_2O$] = 459,14 (6,29) [6 $CH_2O$], 489,15 (9,74) [7 $CH_2O$], 519,16 (11,20) [8 $CH_2O$], 549,17 (15,39) [9 $CH_2O$], 579,19 (15,48) [10 $CH_2O$], 609,20 (14,23) [11 $CH_2O$], 639,21 (11,36) [12 $CH_2O$], 669,22 (8,56) [13 $CH_2O$], 699,23 (6,03) [14 $CH_2O$], 729,24 (3,76) [15 $CH_2O$], 759,25 (1,98) [16 $CH_2O$], 789,26 (1,41) [17 $CH_2O$].

Somit kann Reihe 1 einem nicht-alternierenden Formaldehyd/$CO_2$-Copolymer mit einer $CO_2$-Einheit und 7 bis 18 Formaldehyd-Einheiten, Reihe 2 einem nicht-alternierenden Formaldehyd/$CO_2$-Copolymer mit 2 $CO_2$-Einheiten und 7 bis 15 Formaldehyd-Einheiten, Reihe 3 einem nicht-alternierenden Formaldehyd/$CO_2$-Copolymer mit 3 $CO_2$-Einheiten und 5 bis 18 Formaldehyd-Einheiten und Reihe 4 einem Formaldehyd-$CO_2$-Copolymer mit 4 $CO_2$-Einheiten und 6 bis 17 Formaldehyd-Einheiten zugeordnet werden.

Das relative Verhältnis von Formaldehyd-Einheiten zu $CO_2$-Einheiten ist somit in allen Ketten > 1:1, womit das Vorliegen nicht-alternierender Formaldehyd/$CO_2$-Copolymere zweifelsfrei bewiesen ist. Beispiele 3 bis 6 zeigen, dass bei unterschiedlichen Verhältnissen der basischen Komponente (= Base) zu Formaldehyd (Base : Formaldehyd-Äquivalente = 1:199 in Beispiel 4 bis 1:20 in Beispiel 6) erfindungsgemäße Formaldehyd/$CO_2$-Copolymere erhalten werden.

Beispiel 7: Herstellung eines acylierten Formaldehyd/$CO_2$-Copolymers mit Paraformaldehyd, Sn-Kat. 2 (Zinn(II)acetat) und Base 1 (Cäsiumcarbonat)

In einem 200 ml Reaktor aus Edelstahl wurden 15,14 g (entsprechend 0,504 mol Formaldehyd-Äquivalenten) Paraformaldehyd (Acros Organics), 1,65 g (5,06 mmol) Base 1 ($Cs_2CO_3$) und 4,1 mg (0,017 mmol) Sn-Kat. 2 (Zinn(II)acetat) vorgelegt. Dann wurden 40 ml 1,4-Dioxan zugegeben. Anschließend wurde 20 bar (absolut) Kohlendioxid aufgepresst und das Reaktionsgemisch auf 120 °C erwärmt. Nach Erreichen der Temperatur von 120 °C wurde der Überdruck auf 32 bar (absolut) eingestellt und das Reaktionsgemisch bei 500 U/min mit einem Gaseintragsrührer 16 h bei 120 °C gerührt. Nach Abkühlen auf 25 °C wurden bei einer Flussrate von 5 ml/min mit einer HPLC-Pumpe unter Rühren 30 ml Essigsäureanhydrid zudosiert. Nach vollendeter Zugabe wurde das Reaktionsgemisch unter Rühren bei 500 U/min auf 60 °C erwärmt und 3 h bei 60 °C gerührt. Im Anschluss wurde der Reaktor auf 25 °C abgekühlt und der Überdruck abgelassen. Es wurde ein farbloses inhomogenes Gemisch bestehend aus flüssigen und festen Bestandteilen erhalten. Das erhaltene Produktgemisch wurde in ein Becherglas überführt und tropfenweise mit gesättigter Natriumcarbonat-Lösung versetzt, bis ein pH-Wert der Lösung > 7 erreicht wurde. Das so erhaltene Gemisch wurde über einen Papierfilter filtriert und das Filtrat mit 4x 50 ml Dichlormethan extrahiert. Nach Entfernen der flüchtigen Bestandteile unter Vakuum wurden 3,07 g eines farblosen Öls erhalten.

Im Gegensatz zum Ausgangsmaterial Paraformaldehyd ist das Produkt löslich in Dichlormethan und Chloroform.

Über Gel-Permeations-Chromatographie (GPC) gegen Polystrol-Standards mit Chloroform als Eluent wurde ein mittleres Molekulargewicht $M_n$ = 639 g/mol und ein Polydispersitätsindex PDI = 1,08 ermittelt.

IR: v = 2975 (vw, v[$CH_2$]), 2918 (vw, v[$CH_2$]), 1747 (m, v[C=O]), 1573 (vw), 1426 (w), 1369 (w), 1224 (m), 1195 (m), 1145 (w), 1111 (w), 1046 (w), 1006 (m), 980 (m), 918 (s), 831 (w), 605 (w), 520 (vw), 456 (w) cm$^{-1}$.

$^1$H-NMR (400 MHz, $CDCl_3$): δ = 2,01 - 2,06 (m, 1,00 H, $CH_3$), 3,31 - 3,35 (m, 0,11 H), 4,64 - 4,69 (m, 0,08 H, O-$CH_2$-O), 4,79 - 4,89 (m, 0,36 H, O-$CH_2$-O), 5,25 - 5,33 (m, 0,40 H, O-$CH_2$-O), 5,70 (s, 0,12 H, O-$CH_2$-O) ppm.

$^{13}$C-APT-NMR (400 MHz, CDCl$_3$): δ = 20,7 (-, CH$_3$), 20,9 (-, CH$_3$), 55,8 (-), 55,9 (-), 79,2 (+, O-CH$_2$-O), 85,5 (+, O-CH$_2$-O), 86,9 (+, O-CH$_2$-O), 88,7 (+, O-CH$_2$-O), 88,8 (+, O-CH$_2$-O), 89,2 (+, O-CH$_2$-O), 90,2 (+, O-CH$_2$-O), 90,7 (+, O-CH$_2$-O), 90,7 (+, O-CH$_2$-O), 92,4 (+, O-CH$_2$-O), 93,6 (+, O-CH$_2$-O), 169,7 (+, C=O), 170,2 (+, C=O) ppm.

ESI-MS (FTMS + p ESI): Im ESI-Massenspektrum wurden die nachfolgend genannten Signalreihen identifiziert, die der folgenden allgemeinen Summenformel zugeordnet werden können:

$$[H_3CCOO(CH_2O)_x(CO_2)_yCOCH_3] + H^+$$

Reihe 1 (y = 1): m/z (%) [x CH$_2$O] = 387,12 (0,85) [8 CH$_2$O], 417,13 (1,04) [9 CH$_2$O], 447,14 (1,39) [10 CH$_2$O], 477,15 (1,05) [11 CH$_2$O], 507,16 (0,78) [12 CH$_2$O], 537,17 (0,53) [13 CH$_2$O].

Reihe 2 (y = 2): m/z (%) [x CH$_2$O] = 341,08 (1,80) [5 CH$_2$O], 371,09 (3,41) [6 CH$_2$O], 401,10 (4,12) [7 CH$_2$O], 431,11 (5,23) [8 CH$_2$O], 461,12 (6,87) [9 CH$_2$O], 491,13 (5,09) [10 CH$_2$O], 521,14 (2,31) [11 CH$_2$O], 551,15 (0,83) [12 CH$_2$O].

Reihe 3 (y = 3): m/z (%) [x CH$_2$O] = 385,11 (4,56) [5 CH$_2$O], 415,12 (4,98) [6 CH$_2$O], 445,13 (16,03) [7 CH$_2$O], 475,14 (14,29) [8 CH$_2$O], 505,15 (14,60) [9 CH$_2$O], 535,16 (11,00) [10 CH$_2$O], 565,17 (5,99) [11 CH$_2$O], 595,18 (2,83) [12 CH$_2$O].

Reihe 4 (y = 4): m/z (%) [x CH$_2$O] = 459,14 (1,37) [6 CH$_2$O], 489,15 (1,44) [7 CH$_2$O], 519,16 (2,44) [8 CH$_2$O], 549,18 (2,18) [9 CH$_2$O], 579,19 (2,36) [10 CH$_2$O], 609,20 (1,25) [11 CH$_2$O], 639,21 (0,69) [12 CH$_2$O].

Somit kann Reihe 1 einem nicht-alternierenden Formaldehyd/CO$_2$-Copolymer mit einer CO$_2$-Einheit und 8 bis 13 Formaldehyd-Einheiten, Reihe 2 einem nicht-alternierenden Formaldehyd/CO$_2$-Copolymer mit 2 CO$_2$-Einheiten und 5 bis 12 Formaldehyd-Einheiten, Reihe 3 einem nicht-alternierenden Formaldehyd/CO$_2$-Copolymer mit 3 CO$_2$-Einheiten und 5 bis 12 Formaldehyd-Einheiten und Reihe 4 einem Formaldehyd-CO$_2$-Copolymer mit 4 CO$_2$-Einheiten und 6 bis 12 Formaldehyd-Einheiten zugeordnet werden.

Das relative Verhältnis von Formaldehyd-Einheiten zu CO$_2$-Einheiten ist somit in allen Ketten > 1:1, womit das Vorliegen nicht-alternierender Formaldehyd/CO$_2$-Copolymere zweifelsfrei bewiesen ist.

Beispiel 8: Herstellung eines acylierten Formaldehyd/CO$_2$-Copolymers mit Paraformaldehyd, Sn-Kat. 3 (Zinnbis(2-ethylhexanoat)) und Base 1 (Cäsiumcarbonat)

In einem 200 ml Reaktor aus Edelstahl wurden 15,34 g (entsprechend 0,511 mol Formaldehyd-Äquivlaenten) Paraformaldehyd (Acros Organics), 1,64 g (5,03 mmol) Base 1 (Cs$_2$CO$_3$) und 9,8 mg Sn-Kat. 3 (Borchi® Kat 28, enthaltend Zinnbis(2-ethylhexanoat)) vorgelegt. Dann wurden 40 ml 1,4-Dioxan zugegeben. Anschließend wurde 10 bar (absolut) Kohlendioxid aufgepresst und das Reaktionsgemisch auf 120 °C erwärmt. Nach Erreichen der Temperatur von 120 °C wurde der Überdruck mit Kohlendioxid auf 30 bar (absolut) eingestellt und das Reaktionsgemisch bei 409 U/min mit einem Gaseintragsrührer 16 h bei 120 °C gerührt. Nach Abkühlen auf 25 °C wurden bei einer Flussrate von 1 ml/min mit einer HPLC-Pumpe unter Rühren 30 ml Essigsäureanhydrid zudosiert. Nach vollendeter Zugabe wurde das Reaktionsgemisch unter Rühren bei 409 U/min auf 60 °C erwärmt und 3 h bei 60 °C gerührt. Im Anschluss wurde der Reaktor auf 25 °C abgekühlt und der Überdruck abgelassen. Es wurde ein farbloses inhomogenes Gemisch bestehend aus flüssigen und festen Bestandteile erhalten. Das erhaltene Produktgemisch wurde in ein Becherglas überführt und tropfenweise mit gesättigter Natriumcarbonat-Lösung versetzt, bis ein pH-Wert der Lösung > 7 erreicht wurde. Nach Zugabe von 140 ml Dichlormethan wurde das erhaltene Gemisch über Papierfilter filtriert. Nach Entfernen der flüchtigen Bestandteile unter Vakuum wurden 5,48 g eines hellgelben Öls mit farblosen Feststoffpartikeln erhalten.

Im Gegensatz zum Ausgangsmaterial Paraformaldehyd ist das Produkt löslich in Dichlormethan und Chloroform.

Über Gel-Permeations-Chromatographie (GPC) gegen Polystrol-Standards mit Chloroform als Eluent wurde ein mittleres Molekulargewicht $M_n$ = 799 g/mol und ein Polydispersitätsindex PDI = 1,19 ermittelt.

IR: v = 2981 (w, v[CH$_2$]), 2918 (w, v[CH$_2$]), 1750 (m, v[C=O]), 1451 (w), 1430 (w), 1369 (w), 1227 (m), 1193 (s), 1145 (w), 1111 (w), 1046 (w), 1009 (s), 979 (m), 915 (s), 821 (w), 606 (w), 519 (vw), 456 (w) cm$^{-1}$.

$^1$H-NMR (400 MHz, CDCl$_3$):_ δ = 0,80 - 0,94 (m, 0,13 H), 1,20 - 1,28 (m, 0,13 H), 2,03 - 2,07 (m, 1,00 H, CH$_3$), 3,35 (s, 0,10 H), 4,67 - 4,69 (m, 0,10 H, O-CH$_2$-O), 4,71 (s, 0,03 H, O-CH$_2$-O), 4,82 - 4,90 (m, 0,52 H, O-CH$_2$-O), 5,26 - 5,32 (m, 0,34 H, O-CH$_2$-O), 5,68 (s, 0,16 H, O-CH$_2$-O) ppm.

$^{13}$C-APT-NMR (400 MHz, CDCl$_3$): δ = 11,7 (-), 13,9 (-), 20,7 (-, CH$_3$), 21,0 (-, CH$_3$), 22,6 (+), 24,9 (+), 29,4 (+), 31,1 (+), 48,2 (-), 55,9 (-), 56,0 (-), 79,2 (+, O-CH$_2$-O), 85,6 (+, O-CH$_2$-O), 86,9 (+, O-CH$_2$-O), 89,2 (+, O-CH$_2$-O), 90,2 (+, O-CH$_2$-O), 90,7 (+, O-CH$_2$-O), 92,4 (+, O-CH$_2$-O), 93,6 (+, O-CH$_2$-O), 95,1 (+, O-CH$_2$-O), 169,7 (+, C=O), 170,2 (+, C=O), 170.4 (+, C=O)ppm.

ESI-MS (FTMS + p ESI): Im ESI-Massenspektrum wurden als Signalreihen mit der größten Signalintensität die nachfolgend genannten Signalreihen identifiziert, die der folgenden allgemeinen Summenformel zugeordnet werden können:

$$[H_3CCOO(CH_2O)_x(CO_2)_yCOCH_3] + H^+$$

Reihe 1 (y = 1): $m/z$ (%) [x CH$_2$O] = 357,11 (0,87) [7 CH$_2$O], 387,12 (1,61) [8 CH$_2$O], 417,13 (2,88) [9 CH$_2$O], 447,14 (4,68) [10 CH$_2$O], 477,15 (6,33) [11 CH$_2$O], 507,17 (5,42) [12 CH$_2$O], 537,18 (4,78) [13 CH$_2$O], 567,19 (3,04) [14 CH$_2$O].

Reihe 2 (y = 2): $m/z$ (%) [x CH$_2$O] = 371,09 (1,72) [6 CH$_2$O], 401,10 (6,30) [7 CH$_2$O], 431,11 (11,25) [8 CH$_2$O], 461,12 (14,26) [9 CH$_2$O], 491,13 (17,50) [10 CH$_2$O], 521,15 (17,61) [11 CH$_2$O], 551,16 (14,90) [12 CH$_2$O], 581,17 (11,24) [13 CH$_2$O], 611,18 (7,97) [14 CH$_2$O], 641,19 (5,22) [15 CH$_2$O], 671,20 (3,23) [16 CH$_2$O], 701,21 (1,97) [17 CH$_2$O].

Reihe 3 (y = 3): $m/z$ (%) [x CH$_2$O] = 385,11 (3,74) [5 CH$_2$O], 415,12 (11,78) [6 CH$_2$O], 445,13 (26,95) [7 CH$_2$O], 475,14 (48,97) [8 CH$_2$O], 505,15 (83,20) [9 CH$_2$O], 535,16 (100,0) [10 CH$_2$O], 565,17 (94,00) [11 CH$_2$O], 595,18 (74,10) [12 CH$_2$O], 625,19 (53,15) [13 CH$_2$O], 655,20 (36,44) [14 CH$_2$O], 685,21 (23,88) [15 CH$_2$O], 715,22 (14,54) [16 CH$_2$O], 745,23 (8,74) [17 CH$_2$O], 775,25 (4,85) [18 CH$_2$O], 805,26 (2,70) [19 CH$_2$O], 835,27 (1,47) [20 CH$_2$O].

Reihe 4 (y = 4): $m/z$ (%) [x CH$_2$O] = 489,12 (0,52) [7 CH$_2$O], 519,13 (0,81) [8 CH$_2$O], 549,14 (1,07) [9 CH$_2$O], 579,15 (1,04) [10 CH$_2$O], 609,16 (0,83) [11 CH$_2$O], 639,17 (0,61) [12 CH$_2$O].

Somit kann Reihe 1 einem nicht-alternierenden Formaldehyd/CO$_2$-Copolymer mit einer CO$_2$-Einheit und 7 bis 14 Formaldehyd-Einheiten, Reihe 2 einem nicht-alternierenden Formaldehyd/CO$_2$-Copolymer mit 2 CO$_2$-Einheiten und 5 bis 17 Formaldehyd-Einheiten, Reihe 3 einem nicht-alternierenden Formaldehyd/CO$_2$-Copolymer mit 3 CO$_2$-Einheiten und 5 bis 20 Formaldehyd-Einheiten und Reihe 4 einem Formaldehyd-CO$_2$-Copolymer mit 4 CO$_2$-Einheiten und 7 bis 12 Formaldehyd-Einheiten zugeordnet werden. Das intensivste Signal im ESI-Massenspektrum wurde einem Formaldehyd/CO$_2$-Copolymer mit 3 CO$_2$-Einheiten und 10 Formaldehyd-Einheiten zugeordnet.

Das relative Verhältnis von Formaldehyd-Einheiten zu CO$_2$-Einheiten ist somit in allen Ketten > 1:1, womit das Vorliegen nicht-alternierender Formaldehyd/CO$_2$-Copolymere zweifelsfrei bewiesen ist.

Beispiel 9: Herstellung eines acylierten Formaldehyd/CO$_2$-CO$_2$-Copolymers mit Paraformaldehyd, Bi-Kat. 1 (Bismuttris(2-ethylhexanoat)) und Base 1 (Cäsiumcarbonat)

In einem 200 ml Reaktor aus Edelstahl wurden 15,00 g (entsprechend 0,500 mol Formaldehyd-Äquivalenten) Paraformaldehyd (Acros Organics), 1,65 g (5,06 mmol) Base 1 (Cs$_2$CO$_3$) und 10,1 mg Bi-Kat. 1 (Borchi® Kat 24, enthaltend Bismuttris(2-ethylhexanoat)) vorgelegt. Dann wurden 40 ml 1,4-Dioxan zugegeben. Anschließend wurde 10 bar (absolut) Kohlendioxid aufgepresst und das Reaktionsgemisch auf 120 °C erwärmt. Nach Erreichen der Temperatur von 120 °C wurde der Überdruck mit Kohlendioxid auf 30 bar (absolut) eingestellt und das Reaktionsgemisch bei 415 U/min mit einem Gaseintragsrührer 16 h bei 120 °C gerührt. Nach Abkühlen auf 25 °C wurden bei einer Flussrate von 5 ml/min mit einer HPLC-Pumpe unter Rühren 30 ml Essigsäureanhydrid zudosiert. Nach vollendeter Zugabe wurde das Reaktionsgemisch unter Rühren bei 415 U/min auf 60 °C erwärmt und 3 h bei 60 °C gerührt. Im Anschluss wurde der Reaktor auf 25 °C abgekühlt und der Überdruck abgelassen. Es wurde ein hellgelbes homogenes Gemisch erhalten. Das erhaltene Produktgemisch wurde in ein Becherglas überführt und tropfenweise mit gesättigter Natriumcarbonat-Lösung versetzt, bis ein pH-Wert der Lösung > 7 erreicht wurde. Das so erhaltene Produkt wurde mit insgesamt 300 ml Dichlormethan extrahiert. Nach Entfernen der flüchtigen Bestandteile unter Vakuum wurden 12,69 g eines hellgelben Öls mit farblosen Feststoffpartikeln erhalten.

Im Gegensatz zum Ausgangsmaterial Paraformaldehyd ist das Produkt löslich in Dichlormethan und Chloroform.

Über Gel-Permeations-Chromatographie (GPC) gegen Polystrol-Standards mit Chloroform als Eluent wurde ein mittleres Molekulargewicht $M_n$ = 648 g/mol und ein Polydispersitätsindex PDI = 1,19 ermittelt.

IR: $v$ = 3490 (b, vw, v[OH]), 2975 (w, v[CH$_2$]), 2904 (w, v[CH$_2$]), 1740 (m, v[C=O]), 1468 (w), 1421 (w), 1369 (w), 1224 (m), 1196 (m), 1110 (m), 1045 (m), 1008 (m), 917 (s), 833 (w), 606 (w), 532 (vw), 453 (vw) cm$^{-1}$.

$^1$H-NMR (400 MHz, CDCl$_3$):_ $\delta$ = 2,01 - 2,03 (m, 1,00 H, CH$_3$), 3,00 - 3,12 (m, 0,19 H), 3,61 (s, 0,04 H), 4,03 - 4,08 (m, 0,03 H), 4,62 - 4,64 (m, 0,10 H, O-CH$_2$-O), 4,67 (s, 0,03 H, O-CH$_2$-O), 4,78 - 4,86 (m, 0,37 H, O-CH$_2$-O), 5,14 - 5,31 (m, 0,37 H, O-CH$_2$-O), 5,64 (s, 0,09 H, O-CH$_2$-O) ppm.

$^{13}$C-APT-NMR (400 MHz, CDCl$_3$): δ = 20,6 (-, CH$_3$), 20,9 (-, CH$_3$), 55,7 (-), 55,8 (-), 64,7 (+), 67,0 (+) 70,5 (+), 75,6 (+), 79,1 (+, O-CH$_2$-O), 85,1 (+, O-CH$_2$-O), 85,4 (+, O-CH$_2$-O), 86,8 (+, O-CH$_2$-O), 88,6 (+, O-CH$_2$-O), 88,7 (+, O-CH$_2$-O), 89,0 (+, O-CH$_2$-O), 89,1 (+, O-CH$_2$-O), 90,1 (+, O-CH$_2$-O), 90,5 (+, O-CH$_2$-O), 93,5 (+, O-CH$_2$-O), 95,0 (+, O-CH$_2$-O), 169,6 (+, C=O), 170,1 (+, C=O) ppm.

ESI-MS (FTMS + p ESI): Im ESI-Massenspektrum wurden als Signalreihen mit der größten Signalintensität die nachfolgend genannten Signalreihen identifiziert, die der folgenden allgemeinen Summenformel zugeordnet werden können:

$$[H_3CCOO(CH_2O)_x(CO_2)_yCOCH_3] + H^+$$

Reihe 1 (y = 1): m/z (%) [x CH$_2$O] = 357,12 (0,87) [7 CH$_2$O], 387,13 (1,64) [8 CH$_2$O], 417,14 (2,87) [9 CH$_2$O], 447,15 (4,97) [10 CH$_2$O], 477,16 (7,11) [11 CH$_2$O], 507,17 (5,85) [12 CH$_2$O], 537,18 (5,32) [13 CH$_2$O], 567,19 (4,66) [14 CH$_2$O].

Reihe 2 (y = 2): m/z (%) [x CH$_2$O] = 371,09 (1,60) [6 CH$_2$O], 401,11 (6,45) [7 CH$_2$O], 431,12 (11,39) [8 CH$_2$O], 461,13 (14,06) [9 CH$_2$O], 491,14 (17,11) [10 CH$_2$O], 521,15 (16,83) [11 CH$_2$O], 551,16 (14,36) [12 CH$_2$O], 581,17 (10,67) [13 CH$_2$O], 611,18 (7,68) [14 CH$_2$O], 641,19 (4,93) [15 CH$_2$O], 671,20 (3,10) [16 CH$_2$O], 701,21 (1,92) [17 CH$_2$O], 731,22 (0,99) [18 CH$_2$O].

Reihe 3 (y = 3): m/z (%) [x CH$_2$O] = 385,11 (3,43) [5 CH$_2$O], 415,12 (11,01) [6 CH$_2$O], 445,13 (25,91) [7 CH$_2$O], 475,14 (48,38) [8 CH$_2$O], 505,15 (82,53) [9 CH$_2$O], 535,16 (100,0) [10 CH$_2$O], 565,17 (94,14) [11 CH$_2$O], 595,18 (74,89) [12 CH$_2$O], 625,20 (53,50) [13 CH$_2$O], 655,21 (36,10) [14 CH$_2$O], 685,22 (23,17) [15 CH$_2$O], 715,23 (14,09) [16 CH$_2$O], 745,24 (8,47) [17 CH$_2$O], 775,25 (4,57) [18 CH$_2$O], 805,26 (2,35) [19CH$_2$O], 835,27 (1,30) [20 CH$_2$O].

Reihe 4 (y = 4): m/z (%) [x CH$_2$O] = 459,15 (3,66) [6 CH$_2$O], 489,16 (5,87) [7 CH$_2$O], 519,17 (7,94) [8 CH$_2$O], 549,18 (10,31) [9 CH$_2$O], 579,19 (12,90) [10 CH$_2$O], 609,20 (14,32) [11 CH$_2$O], 639,22 (11,27) [12 CH$_2$O], 699,23 (8,91) [13 CH$_2$O], 729,24 (6,18) [14 CH$_2$O], 759,25 (4,16) [15 CH$_2$O].

Somit kann Reihe 1 einem nicht-alternierenden Formaldehyd/CO$_2$-Copolymer mit einer CO$_2$-Einheit und 7 bis 14 Formaldehyd-Einheiten, Reihe 2 einem nicht-alternierenden Formaldehyd/CO$_2$-Copolymer mit 2 CO$_2$-Einheiten und 5 bis 18 Formaldehyd-Einheiten, Reihe 3 einem nicht-alternierenden Formaldehyd/CO$_2$-Copolymer mit 3 CO$_2$-Einheiten und 5 bis 20 Formaldehyd-Einheiten und Reihe 4 einem Formaldehyd-CO$_2$-Copolymer mit 4 CO$_2$-Einheiten und 6 bis 15 Formaldehyd-Einheiten zugeordnet werden. Das intensivste Signal im ESI-Massenspektrum wurde einem Formaldehyd/CO$_2$-Copolymer mit 3 CO$_2$-Einheiten und 10 Formaldehyd-Einheiten zugeordnet.

Das relative Verhältnis von Formaldehyd-Einheiten zu CO$_2$-Einheiten ist somit in allen Ketten > 1:1, womit das Vorliegen nicht-alternierender Formaldehyd/CO$_2$-Copolymere zweifelsfrei bewiesen ist.

Beispiel 10: Herstellung eines acylierten Formaldehyd/CO$_2$-Copolymers mit Paraformaldehyd, Zn-Kat. 1 (Zinkbis(2-ethylhexanoat)) und Base 1 (Cäsiumcarbonat)

In einem 200 ml Reaktor aus Edelstahl wurden 15,04 g (entsprechend 0,501 mol Formaldehyd-Äquivalenten) Paraformaldehyd (Acros Organics), 1,63 g (5,00 mmol) Base 1 (Cs$_2$CO$_3$) und 11,4 mg Zn-Kat. 1 (Borchi® Kat 22, enthaltend Zinkbis(2-ethylhexanoat)) vorgelegt. Dann wurden 40 ml 1,4-Dioxan zugegeben. Anschließend wurde 10 bar (absolut) Kohlendioxid aufgepresst und das Reaktionsgemisch auf 120 °C erwärmt. Nach Erreichen der Temperatur von 120 °C wurde der Überdruck mit Kohlendioxid auf 30 bar (absolut) eingestellt und das Reaktionsgemisch bei 452 U/min mit einem Gaseintragsrührer 16 h bei 120 °C gerührt. Nach Abkühlen auf 25 °C wurden bei einer Flussrate von 5 ml/min mit einer HPLC-Pumpe unter Rühren 30 ml Essigsäureanhydrid zudosiert. Nach vollendeter Zugabe wurde das Reaktionsgemisch unter Rühren bei 500 U/min auf 60 °C erwärmt und 3 h bei 60 °C gerührt. Im Anschluss wurde der Reaktor auf 25 °C abgekühlt und der Überdruck abgelassen. Es wurde ein farbloses inhomogenes Gemisch bestehend aus flüssigen und festen Bestandteilen erhalten. Das erhaltene Produktgemisch wurde in ein Becherglas überführt und tropfenweise mit gesättigter Natriumcarbonat-Lösung versetzt, bis ein pH-Wert der Lösung > 7 erreicht wurde. Das erhaltene Gemisch wurde über einen Büchnertrichter unter Vakuum filtriert. Das erhaltene Filtrat wurde mit insgesamt 300 ml Dichlormethan extrahiert. Nach Entfernen der flüchtigen Bestandteile unter Vakuum wurden 5,14 g eines farblosen Öls erhalten.

Im Gegensatz zum Ausgangsmaterial Paraformaldehyd ist das Produkt löslich in Dichlormethan und Chloroform.

Über Gel-Permeations-Chromatographie (GPC) gegen Polystrol-Standards mit Chloroform als Eluent wurde ein mittleres Molekulargewicht $M_n$ = 645 g/mol und ein Polydispersitätsindex PDI = 1,09 ermittelt.

IR: $v$ = 2983 (w, $v[CH_2]$), 2914 (w, $v[CH_2]$), 1750 (m, $v[C=O]$), 1431 (w), 1369 (m), 1226 (m), 1193 (s), 1145 (w), 1111 (w), 1086 (w), 1046 (w), 1009 (s), 980 (m), 917 (s), 821 (m), 605 (w), 518 (w), 455 (w) cm$^{-1}$.

$^1$H-NMR (400 MHz, CDCl$_3$): $\delta$ = 1,97 - 2,00 (m, 1,00 H, CH$_3$), 3,25 - 3,28 (m, 0,10 H), 4,59 - 4,61 (m, 0,05 H, O-CH$_2$-O), 4,63 (m, 0,01 H, O-CH$_2$-O), 4,72 - 4,84 (m, 0,28 H, O-CH$_2$-O), 5,19 - 5,26 (m, 0,25 H, O-CH$_2$-O), 5,60 (s, 0,18 H, O-CH$_2$-O) ppm.

$^{13}$C-APT-NMR (400 MHz, CDCl$_3$): $\delta$ = 20,6 (-, CH$_3$), 20,8 (-, CH$_3$), 55,7 (-), 79,1 (+, O-CH$_2$-O), 85,4 (+, O-CH$_2$-O), 86,7 (+, O-CH$_2$-O), 88,6 (+, O-CH$_2$-O), 88,6 (+, O-CH$_2$-O), 88,7 (+, O-CH$_2$-O), 89,0 (+, O-CH$_2$-O), 89,1 (+, O-CH$_2$-O), 90,0 (+, O-CH$_2$-O), 90,5 (+, O-CH$_2$-O), 90,5 (+, O-CH$_2$-O), 90,6 (+, O-CH$_2$-O), 92,3 (+, O-CH$_2$-O), 93,5 (+, O-CH$_2$-O), 94,9 (+, O-CH$_2$-O), 169,4 (+, C=O) ppm.

ESI-MS (FTMS + p ESI): Im ESI-Massenspektrum wurden als Signalreihen mit der größten Signalintensität die nachfolgend genannten Signalreihen identifiziert, die der folgenden allgemeinen Summenformel zugeordnet werden können:

$$[H_3CCOO(CH_2O)_x(CO_2)_yCOCH_3] + H^+$$

Reihe 1 (y = 1): *m/z* (%) [x CH$_2$O] = 297,09 (1,84) [5 CH$_2$O], 327,10 (4,83) [6 CH$_2$O], 357,11 (6,06) [7 CH$_2$O], 387,12 (17,85) [8 CH$_2$O], 417,13 (57,51) [9 CH$_2$O], 447,15 (43,49) [10 CH$_2$O], 477,16 (100,0) [11 CH$_2$O], 507,17 (58,17) [12 CH$_2$O], 537,18 (60,86) [13 CH$_2$O], 567,19 (57,10) [14 CH$_2$O], 597,20 (49,44) [15 CH$_2$O], 627,21 (39,63) [16 CH$_2$O], 657,22 (30,00) [17 CH$_2$O], 687,23 (20,44) [18 CH$_2$O], 717,24 (12,49) [19 CH$_2$O], 747,25 (7,32) [20 CH$_2$O], 777,26 (3,84) [21 CH$_2$O].

Reihe 2 (y = 2): *m/z* (%) [x CH$_2$O] = 341,08 (1,03) [5 CH$_2$O], 371,09 (3,60) [6 CH$_2$O], 401,10 (7,60) [7 CH$_2$O], 431,11 (10,46) [8 CH$_2$O], 461,13 (11,44) [9 CH$_2$O], 491,14 (11,04) [10 CH$_2$O], 521,15 (9,70) [11 CH$_2$O], 551,16 (7,79) [12 CH$_2$O], 581,17 (6,43) [13 CH$_2$O], 611,18 (5,02) [14 CH$_2$O], 641,19 (3,75) [15 CH$_2$O], 671,20 (2,86) [16 CH$_2$O], 701,21 (1,86) [17 CH$_2$O], 731,22 (1,29) [18 CH$_2$O], 761,28 (0,77) [19 CH$_2$O].

Reihe 3 (y = 3): *m/z* (%) [x CH$_2$O] = 385,11 (8,39) [5 CH$_2$O], 415,12 (22,08) [6 CH$_2$O], 445,13 (39,24) [7 CH$_2$O], 475,14 (52,13) [8 CH$_2$O], 505,15 (65,51) [9 CH$_2$O], 535,16 (72,70) [10 CH$_2$O], 565,17 (75,60) [11 CH$_2$O], 595,18 (73,43) [12 CH$_2$O], 625,19 (68,85) [13 CH$_2$O], 655,20 (59,93) [14 CH$_2$O], 685,22 (49,36) [15 CH$_2$O], 715,23 (37,77) [16 CH$_2$O], 745,24 (27,77) [17 CH$_2$O], 775,25 (18,84) [18 CH$_2$O], 805,26 (11,62) [19 CH$_2$O], 835,27 (6,91) [20 CH$_2$O], 865,28 (3,71) [21 CH$_2$O], 895,29 (2,12) [22 CH$_2$O], 925,30 (1,13) [23 CH$_2$O].

Reihe 4 (y = 4): *m/z* (%) [x CH$_2$O] = 459,15 (9,00) [6 CH$_2$O], 489,16 (23,99) [7 CH$_2$O], 519,17 (43,00) [8 CH$_2$O], 549,18 (33,15) [9 CH$_2$O], 579,19 (37,73) [10 CH$_2$O], 609,20 (34,37) [11 CH$_2$O], 639,21 (31,23) [12 CH$_2$O], 669,22 (27,06) [13 CH$_2$O], 699,23 (21,12) [14 CH$_2$O], 729,24 (15,86) [15 CH$_2$O], 759,25 (10,99) [16 CH$_2$O], 789,26 (7,15) [17 CH$_2$O], 819,27 (4,67) [18 CH$_2$O], 849,28 (2,86) [19 CH$_2$O].

Somit kann Reihe 1 einem nicht-alternierenden Formaldehyd/CO$_2$-Copolymer mit einer CO$_2$-Einheit und 5 bis 21 Formaldehyd-Einheiten, Reihe 2 einem nicht-alternierenden Formaldehyd/CO$_2$-Copolymer mit 2 CO$_2$-Einheiten und 5 bis 19 Formaldehyd-Einheiten, Reihe 3 einem nicht-alternierenden Formaldehyd/CO$_2$-Copolymer mit 3 CO$_2$-Einheiten und 5 bis 23 Formaldehyd-Einheiten und Reihe 4 einem Formaldehyd-CO$_2$-Copolymer mit 4 CO$_2$-Einheiten und 6 bis 19 Formaldehyd-Einheiten zugeordnet werden. Das intensivste Signal im ESI-Massenspektrum (*m/z* = 477,16) konnte nicht einer Signalreihe zugeordnet werden. Das Signal mit der zweithöchsten Intensität wurde einem Formaldehyd/CO$_2$-Copolymer mit 3 CO$_2$-Einheiten und 11 Formaldehyd-Einheiten zugeordnet.

Das relative Verhältnis von Formaldehyd-Einheiten zu CO$_2$-Einheiten ist somit in allen Ketten >1:1, womit das Vorliegen nicht-alternierender Formaldehyd/CO$_2$-Copolymere zweifelsfrei bewiesen ist.

Beispiel 11: Herstellung eines acylierten Formaldehyd/CO$_2$-Copolymers mit Paraformaldehyd, Zn-Kat. 1 (Zinkbis(2-ethylhexanoat)) und Base 1 (Cäsiumcarbonat)

In einem 200 ml Reaktor aus Edelstahl wurden 15,29 g (entsprechend 0,509 mol Formaldehyd-Äquivalenten) Paraformaldehyd (Acros Organics), 1,67 g (5,13 mmol) Base 1 (Cs$_2$CO$_3$) und 1,78 g Zn-Kat. 1 (Borchi® Kat 22, enthaltend Zinkbis(2-ethylhexanoat)) vorgelegt. Dann wurden 40 ml 1,4-Dioxan zugegeben. Anschließend wurde 10 bar (absolut) Kohlendioxid aufgepresst und das Reaktionsgemisch auf 120 °C erwärmt. Nach Erreichen der Temperatur von 120 °C wurde der Überdruck mit Kohlendioxid auf 30 bar (absolut) eingestellt und das Reaktionsgemisch bei 500 U/min mit einem Gaseintragsrührer 16 h bei 120 °C gerührt. Nach Abkühlen auf 25 °C wurden bei einer Flussrate von 5 ml/min mit einer HPLC-Pumpe unter Rühren 30 ml Essigsäureanhydrid zudosiert. Nach vollendeter Zugabe wurde das Reaktionsgemisch unter Rühren bei 500 U/min auf 60 °C erwärmt und 3 h bei 60 °C gerührt. Im Anschluss wurde der Reaktor auf 25 °C abgekühlt und der Überdruck abgelassen. Es wurde ein farbloses inhomogenes Gemisch bestehend aus flüssigen und festen Bestandteilen erhalten. Das erhaltene Produktgemisch wurde in ein Becherglas überführt und tropfenweise mit gesättigter Natriumcarbonat-Lösung versetzt, bis ein pH-Wert der Lösung > 7 erreicht wurde. Das erhaltene Gemisch wurde über einen Papierfilter filtriert. Das erhaltene Filtrat wurde mit insgesamt 300 ml Dichlormethan extrahiert. Nach Entfernen der flüchtigen Bestandteile unter Vakuum wurden 6,49 g eines farblosen Öls erhalten.

Im Gegensatz zum Ausgangsmaterial Paraformaldehyd ist das Produkt löslich in Dichlormethan und Chloroform.

Über Gel-Permeations-Chromatographie (GPC) gegen Polystrol-Standards mit Chloroform als Eluent wurde ein mittleres Molekulargewicht $M_n$ = 877 g/mol und ein Polydispersitätsindex PDI = 1,76 ermittelt.

IR: v = 2965 (w, v[CH$_2$]), 2938 (w, v[CH$_2$]), 1749 (m, v[C=O]), 1452 (w), 1417 (w), 1369 (w), 1226 (m), 1194 (m), 1145 (w), 1111 (m), 1047 (w), 1009 (m), 980 (m), 916 (s), 821 (w), 606 (w), 519 (vw), 455 (w) cm$^{-1}$.

$^1$H-NMR (400 MHz, CDCl$_3$):_ $\delta$ = 0,80 - 0,88 (m, 0,13 H), 1,23 (bs, 1,24, 0,08 H), 2,02 - 2,05 (m, 1,00 H, CH3), 3,31 - 3,33 (m, 0,11 H), 3,63 (s, 0,01 H), 4,64 - 4,67 (m, 0,07 H, O-CH$_2$-O), 4,69 (s, 0,01 H, O-CH$_2$-O), 4,80 - 4,87 (m, 0,37 H, O-CH$_2$-O), 5,26 - 5,30 (m, 0,31 H, O-CH$_2$-O), 5,66 (s, 0,17 H, O-CH$_2$-O) ppm.

$^{13}$C-APT-NMR (400 MHz, CDCl$_3$): $\delta$ = 11,8 (-), 13,9 (-), 20,6 (-, CH$_3$), 21,0 (-, CH$_3$), 22,6 (+), 25,3 (+), 29,6 (+), 31,5 (+), 47,1 (-), 55,8 (-), 67,0 (+), 79,1 (+, O-CH$_2$-O), 85,1 (+, O-CH$_2$-O), 85,5 (+, O-CH$_2$-O), 86,9 (+, O-CH$_2$-O), 88,7 (+, O-CH$_2$-O), 88,8 (+, O-CH$_2$-O), 89,1 (+, O-CH$_2$-O), 90,2 (+, O-CH$_2$-O), 90,6 (+, O-CH$_2$-O), 92,4 (+, O-CH$_2$-O), 93,6 (+, O-CH$_2$-O), 95,1 (+, O-CH$_2$-O), 169,7 (+, C=O), 170,1 (+, C=O), 170,4 (+, C=O), 181,1 (+, C=O)ppm.

Beispiel 12: Herstellung eines acylierten Formaldehyd/CO$_2$-Copolymers mit Paraformaldehyd, Cu-Kat. 1 (Kupferbis(2-ethylhexanoat)/Kupfernaphthenat) und Base 1 (Cäsiumcarbonat)

In einem 200 ml Reaktor aus Edelstahl wurden 15,00 g (entsprechend 0,500 mol Formaldehyd-Äquivalenten) Paraformaldehyd (Acros Organics), 1,65 g (5,06 mmol) Base 1 (Cs$_2$CO$_3$) und 1,77 g Cu-Kat. 1 (Soligen® Copper 8, enthaltend Kupferbis(2-ethylhexanoat) und Kupfernaphthenat) vorgelegt. Dann wurden 40 ml 1,4-Dioxan zugegeben. Anschließend wurde 10 bar (absolut) Kohlendioxid aufgepresst und das Reaktionsgemisch auf 120 °C erwärmt. Nach Erreichen der Temperatur von 120 °C wurde der Überdruck mit Kohlendioxid auf 30 bar (absolut) eingestellt und das Reaktionsgemisch bei 500 U/min mit einem Gaseintragsrührer 16 h bei 120 °C gerührt. Nach Abkühlen auf 25 °C wurden bei einer Flussrate von 1 ml/min mit einer HPLC-Pumpe unter Rühren 30 ml Essigsäureanhydrid zudosiert. Nach vollendeter Zugabe wurde das Reaktionsgemisch unter Rühren bei 500 U/min auf 60 °C erwärmt und 3 h bei 60 °C gerührt. Im Anschluss wurde der Reaktor auf 25 °C abgekühlt und der Überdruck abgelassen. Es wurde ein hellblaues inhomogenes Gemisch bestehend aus flüssigen und festen Bestandteilen erhalten. Das erhaltene Produktgemisch wurde in ein Becherglas überführt und tropfenweise mit gesättigter Natriumcarbonat-Lösung versetzt, bis ein pH-Wert der Lösung > 7 erreicht wurde. Nach Zugabe von 300 ml Dichlormethan wurde das erhaltene Gemisch in einen Scheidetrichter überführt und die organische Phase abgetrennt. Nach Entfernen der flüchtigen Bestandteile unter Vakuum wurde der Rückstand in Diethylether aufgenommen und über einen Papierfilter filtriert, wobei der Filtrationsrückstand mit Dichlormethan gewaschen wurde. Nach Entfernen der flüchtigen Bestandteile unter Vakuum wurden 4,49 g eines blass-grünen Öls mit farblosen Feststoffpartikeln erhalten.

Im Gegensatz zum Ausgangsmaterial Paraformaldehyd ist das Produkt löslich in Dichlormethan und Chloroform.

Über Gel-Permeations-Chromatographie (GPC) gegen Polystrol-Standards mit Chloroform als Eluent wurde ein mittleres Molekulargewicht $M_n$ = 861 g/mol und ein Polydispersitätsindex PDI = 1,26 ermittelt.

IR: v = 2964 (w, v[CH$_2$]), 2917 (w, v[CH$_2$]), 1749 (m, v[C=O]), 1465 (w), 1420 (w), 1369 (w), 1226 (m), 1195 (m), 1144 (w), 1110 (m), 1008 (m), 980 (m), 913 (s), 822 (w), 736 (w), 606 (w), 532 (vw), 456 (w) cm$^{-1}$.

$^1$H-NMR (400 MHz, CDCl$_3$):_ $\delta$ = 1,92 - 1,95 (m, 1,00 H, CH$_3$), 3,20 - 3,23 (m, 0,03 H), 4,54 - 4,56 (m, 0,04 H, O-CH$_2$-O), 4,58 (s, 0,01 H, O-CH$_2$-O), 4,70 - 4,77 (m, 0,30 H, OCH$_2$-O), 5,15 - 5,20 (m, 0,20 H, O-CH$_2$-O), 5,55 (s, 0,20 H, O-CH$_2$-O) ppm.

$^{13}$C-APT-NMR (400 MHz, CDCl$_3$): $\delta$ = 20,3 (-, CH$_3$), 20,5 (-, CH$_3$), 55,5 (-), 78,9 (+, O-CH$_2$-O), 84,9 (+, O-CH$_2$-O), 85,3 (+, O-CH$_2$-O), 86,6 (+, O-CH$_2$-O), 88,4 (+, O-CH$_2$-O), 88,9 (+, O-CH$_2$-O), 89,9 (+, O-CH$_2$-O), 90,4 (+, O-CH$_2$-O), 92,2 (+, OCH$_2$-O), 93,3 (+, O-CH$_2$-O), 94,8 (+, O-CH$_2$-O), 169,3 (+, C=O), 169,8 (+, C=O), 169,9 (+, C=O), 170,0 (+, C=O) ppm.

Beispiele 7 bis 12 zeigen, dass auch bei Austausch von Sn-Kat. 1 (DBTL) gegen andere Lewis-saure Komponenten erfindungsgemäße Formaldehyd/CO$_2$-Copolymere erhalten werden. Die in den Beispielen 7 bis 12 getesteten Lewis-sauren Komponenten umfassen sowohl Verbindungen, welche als Lewis-saures Zentrum Hauptgruppenelemente (Zinn, 4. Hauptgruppe; Bismut, 5. Hauptgruppe) enthalten, als auch Verbindungen, welche als Lewis-saures Zentrum Nebengruppenelemente (Kupfer, 9. Nebengruppe; Zink, 10. Nebengruppe) enthalten.

Beispiel 13: Herstellung eines Formaldehyd/$CO_2$-Copolymers mit Paraformaldehyd, Sn-Kat. 1 (DBTL) und Base 2 (DABCO)

In einem 200 ml Reaktor aus Edelstahl wurden 15,1 g (entsprechend 0,50 mol Formaldehyd-Äquivalenten) Paraformaldehyd (Aldrich), 5,64g (50,3 mmol) Base 2 (DABCO) und 3,39 g (5,37 mmol) Sn-Kat. 1 (DBTL) unter Argonatmosphäre vorgelegt. Dann wurden im Argon-Gegenstrom 367 mg (4,95 mmol) *tert*-Butanol und 40 ml 1,4-Dioxan zugegeben. Anschließend wurde 10 bar (absolut) Kohlendioxid aufgepresst und das Reaktionsgemisch auf 120 °C erwärmt. Nach Erreichen der Temperatur von 120 °C wurde der Überdruck mit Kohlendioxid auf 30 bar (absolut) eingestellt und das Reaktionsgemisch bei 500 U/min mit einem Gaseintragsrührren 16 h bei 120 °C gerührt. Nach Abkühlen auf 25 °C wurde der Überdruck abgelassen und 50 ml dest. Wasser unter Rühren in den Reaktor gegeben. Das resultierende Gemisch wurde über einen Papierfilter filtriert. Vom Filtrat wurden flüchtige Bestandteile am Rotationsverdampfer bei 100-70 mbar und 40 °C abdestilliert. Als Destillationsrückstand wurden 1,55 g eines viskosen Öls erhalten.
Über Gel-Permeations-Chromatographie (GPC) gegen PMMA-Standards mit DMF als Eluent wurde ein mittleres Molekulargewicht $M_n$ = 461 g/mol und ein Polydispersitätsindex PDI = 1,60 ermittelt.
Der Einbau von $CO_2$ in das Polymer wurde durch das charakteristische Signal im IR-Spektrum bei 1772 cm$^{-1}$ und im $^{13}$C-APT-NMR Spektrum bei $\delta$ = 178.2 ppm ($C_{quart.}$) nachgewiesen (siehe Beispiele 1 und 2).

Beispiel 14: Herstellung eines Formaldehyd/$CO_2$-Copolymers mit Paraformaldehyd, Sn-Kat. 1 (DBTL) und Base 2 (DABCO)

In einem 200 ml Reaktor aus Edelstahl wurden 15,0 g (entsprechend 0,50 mol Formaldehyd-Äquivalenten) Paraformaldehyd (Aldrich), 5,59 g (49,8 mmol) Base 2 (DABCO) und 3,17 g (5,02 mmol) Sn-Kat. 1 (DBTL) unter Argonatmosphäre vorgelegt. Dann wurden im Argon-Gegenstrom 382 mg (5,30 mmol) *tert*-Butanol und 40 ml 1,4-Dioxan zugegeben. Anschließend wurde 10 bar (absolut) Kohlendioxid aufgepresst und das Reaktionsgemisch auf 120 °C erwärmt. Nach Erreichen der Temperatur von 120 °C wurde der Überdruck mit Kohlendioxid auf 30 bar (absolut) eingestellt und das Reaktionsgemisch bei 500 U/min mit einem Gaseintragsrührren 16 h bei 120 °C gerührt. Nach Abkühlen auf 25 °C wurde das resultierende Gemisch in einen 250 ml Rundkolben überführt und flüchtige Bestandteile am Rotationsverdampfer bei 100-70 mbar und 40 °C abdestilliert. Als Destillationsrückstand wurden 20,7 g eines viskosen Öls erhalten.
Über Gel-Permeations-Chromatographie (GPC) gegen PMMA-Standards wurde ein mittleres Molekulargewicht $M_n$ = 446 g/mol und ein Polydispersitätsindex PDI = 1,68 ermittelt.
Der Einbau von $CO_2$ in das Polymer wurde durch das charakteristische Signal im IR-Spektrum bei 1770 cm$^{-1}$ (Schulter) und die charakteristischen Signale im $^{13}$C-APT-NMR Spektrum bei $\delta$ = 175,4 und 173,0 ppm ($C_{quart.}$) nachgewiesen (siehe Beispiele 1 und 2).
Beispiele 13 und 14 zeigen, dass auch bei Austausch von Base 1 (Cäsiumcarbonat, anorganische Base) gegen organische Basen (Base 2, DABCO) als basische Komponente erfindungsgemäße Formaldehyd/$CO_2$-Copolymere erhalten werden.

**Referenzexperimente:**

Vergleichsbeispiel 1: Reaktion von Paraformaldehyd und Kohlendioxid in Abwesenheit eines Katalysators

In einem 200 ml Reaktor aus Edelstahl wurden 15,2g (entsprechend 0,51 mol Formaldehyd-Äquivalenten) Paraformaldehyd (Aldrich) unter Argonatmosphäre vorgelegt. Dann wurden im Argon-Gegenstrom 40 ml 1,4-Dioxan zugegeben. Anschließend wurde 10 bar (absolut) Kohlendioxid aufgepresst und das Reaktionsgemisch auf 120 °C erwärmt. Nach Erreichen der Temperatur von 120 °C wurde der Überdruck mit Kohlendioxid auf 30 bar (absolut) eingestellt und das Reaktionsgemisch bei 500 U/min mit einem Gaseintragsrühren 16h bei 120 °C gerührt. Nach Abkühlen auf 25 °C wurde der Überdruck abgelassen. Das im Reaktor enthaltene Gemisch wurde über einen Papierfilter filtriert und der Feststoff mit Dimethylformamid (DMF) gewaschen. Vom Filtrat wurden flüchtige Bestandteile am Rotationsverdampfer bei 300-3 mbar und 50 °C abdestilliert. Als Destillationsrückstand wurden 1,28 g eines farblosen Wachses erhalten.
Im IR-Spektrum zeigte das Produkt neben schwachen Signalen für DMF eine weitgehende Übereinstimmung mit dem Einsatzstoff Paraformaldehyd. Außer dem für DMF charakteristischen Signal konnte kein Carbonyl-Signal zwischen 1700 und 1800 cm$^{-1}$ im IR-Spektrum gefunden werden.
Dieses Vergleichsbeispiel belegt, dass im Gegensatz zu den erfindungsgemäßen Beispielen keine Reaktion zwischen Paraformaldehyd und Kohlendioxid stattfindet, wenn dem Reaktionsgemisch bei ansonsten gleichen Bedingungen kein Katalysator zugesetzt wird.

Vergleichsbeispiel 2: Reaktion von Paraformaldehyd mit $CO_2$ in Anwesenheit von Sn-Kat. 1 (DBTL) als Lewis-saure Komponente ohne Zusatz einer basischen Komponente

In einem 200 ml Reaktor aus Edelstahl wurden 15,09 g (entsprechend 0,503 mol Formaldehyd-Äquivalenten) Paraformaldehyd (Aldrich), 3,16 g (5,0 mmol) Sn-Kat. 1 (DBTL) und 3,08 g Molsieb (3 Å) vorgelegt. Der Reaktor wurde verschlossen, bei $1 \times 10^{-2}$ bar evakuiert und mit Argon geflutet. Dann wurden im Argon-Gegenstrom 40 ml 1,4-Dioxan zugegeben. Anschließend wurde 10 bar (absolut) Kohlendioxid aufgepresst und das Reaktionsgemisch auf 120 °C erwärmt. Nach Erreichen der Temperatur von 120 °C wurde der Überdruck mit Kohlendioxid auf 30 bar (absolut) eingestellt und das Reaktionsgemisch bei 500 U/min mit einem Gaseintragsrühren 16h bei 120 °C gerührt. Nach Abkühlen auf 25 °C wurde der Überdruck abgelassen. Es wurde ein dunkelbraunes Öl vorgefunden. Die flüchtigen Bestandteile wurden am Rotationsverdampfer bei bei 300-3 mbar und 50 °C abdestilliert. Als Destillationsrückstand wurden 11,62 g eines viskosen dunkelbraunen Öls erhalten.

Im IR-Spektrum wurde kein Signal zwischen 1740 und 1800 cm$^{-1}$ (Carbonat-Region) gefunden. Im $^{13}$C-APT-NMR-Spektrum wurde zwischen 170 und 180 ppm kein quarternäres $^{13}$C-Signal für eine Carbonat-Gruppe beobachtet. Somit wurde kein Einbau von $CO_2$ beobachtet.

Dieses Vergleichsbeispiel belegt, dass im Gegensatz zu den erfindungsgemäßen Beispielen kein Einbau von Kohlendioxid in Form von Carbonat-Gruppen stattfindet, wenn dem Reaktionsgemisch bei ansonsten gleichen Bedingungen ausschließlich eine Lewis-saure Komponente (Sn-Kat. 1, DBTL) in Abwesenheit einer basischen Komponente zugesetzt wird.

Vergleichsbeispiel 3: Reaktion von Paraformaldehyd mit $CO_2$ in Anwesenheit von Base 1 (Cäsiumcarbonat) als basische Komponente ohne Zusatz einer Lewis-sauren Komponente

In einem 200 ml Reaktor aus Edelstahl wurden 15,04 g (entsprechend 0,501 mol Formaldehyd-Äquivalenten) Paraformaldehyd (Aldrich) und 1,63 g (4,99 mmol) Base 1 ($Cs_2CO_3$) vorgelegt. Dann wurden 40 ml 1,4-Dioxan zugegeben. Anschließend wurde 10 bar (absolut) Kohlendioxid aufgepresst und das Reaktionsgemisch auf 120 °C erwärmt. Nach Erreichen der Temperatur von 120 °C wurde der Überdruck mit Kohlendioxid auf 30 bar (absolut) eingestellt und das Reaktionsgemisch bei 500 U/min mit einem Gaseintragsrühren 16 h bei 120 °C gerührt. Nach Abkühlen auf 25 °C wurde der Überdruck abgelassen. Es wurde eine farblose Suspension eines farblosen Feststoffes erhalten. Der Feststoff wurde über einen Papierfilter abfiltriert und mit DMF gewaschen. Die flüchtigen Bestandteile des Filtrates wurden am Rotationsverdampfer bei bei 300-3 mbar und 50 °C abdestilliert. Als Destillationsrückstand wurden 4,38 g eines farblosen, wachsartigen Feststoffs erhalten.

Im IR-Spektrum zeigte das Produkt neben schwachen Signalen für DMF eine weitgehende Übereinstimmung mit dem Einsatzstoff Paraformaldehyd. Außer dem für DMF charakteristischen Signal konnte kein Carbonyl-Signal zwischen 1700 und 1800 cm$^{-1}$ im IR-Spektrum gefunden werden. Im $^{13}$C-APT-NMR-Spektrum wurde zwischen 170 und 180 ppm kein quarternäres $^{13}$C-Signal für eine Carbonat-Gruppe beobachtet.

Dieses Vergleichsbeispiel belegt, dass im Gegensatz zu den erfindungsgemäßen Beispielen keine Reaktion zwischen Paraformaldehyd und Kohlendioxid stattfindet, wenn dem Reaktionsgemisch bei ansonsten gleichen Bedingungen ausschließlich eine basische Komponente (Base 1, Cäsiumcarbonat) in Abwesenheit einer Lewis-sauren Komponente zugesetzt wird.

Vergleichsbeispiel 4: Nachstellung eines Experiments gemäß Stand der Technik (Sharma, *Preprints of Symposia - American Chemica* **2000**,676) mit wässriger Formaldehydlösung und DMAP

In einem 200 ml Reaktor aus Edelstahl wurde ein Gemisch aus 40 ml (43,4 g, entsprechend 0,528 mol Formaldehyd) einer 36,5%igen wässrigen Formaldehydlösung und 2,37 g (19,4 mmol) 4-(Dimethylamino)pyridin (DMAP) eingefroren und in der Kälte mit 18,1 g (0,411 mol) Trockeneis versetzt. Der Reaktor wurde direkt verschlossen und das Reaktionsgemisch unter Rühren auf 120 °C erwärmt. Nach Erreichen der Temperatur von 120 °C wurde das Reaktionsgemisch bei 500 U/min mit einem Gaseintragsrühren 72 h bei 120 °C gerührt. Nach Abkühlen auf 25 °C wurde der Überdruck abgelassen und das erhaltene Reaktionsgemisch 2× mit 50 ml Diethylether extrahiert. Von der wässrigen Fraktion wurden flüchtige Bestandteile am Rotationsverdampfer bei 70 mbar und 40 °C abdestilliert. Als Destillationsrückstand wurden 2,85 g eines viskosen gelben Öls erhalten. Das IR-Spektrum zeigte Übereinstimmung mit dem Ausgangsmaterial DMAP. In den $^1$H und $^{13}$C NMR-Spektren wurde lediglich DMAP nachgewiesen.

Dieses Vergleichsbeispiel belegt, dass unter den in der Literatur angegebenen Bedingungen kein nichtalternierende Formaldehyd/$CO_2$-Copolymer gebildet wird.

Vergleichsbeispiel 5: Nachstellung eines Experiments gemäß Stand der Technik (Sharma, *Preprints of Symposia - American Chemica* **2000**,676) mit Paraformaldehyd, DMAP und 1,4-Dioxan

In einem 200 ml Reaktor aus Edelstahl wurde ein Gemisch aus 10,27 g (entsprechend 0,342 mol Formaldehyd-Äquivalenten) Paraformaldehyd (Aldrich), 1,53 g (12,5 mmol) 4-(Dimethylamino)pyridin (DMAP) und 20 ml 1,4-Dioxan eingefroren und in der Kälte mit 10,9 g (0,248 mol) Trockeneis versetzt. Der Reaktor wurde sofort verschlossen und das Reaktionsgemisch unter Rühren auf 175 °C erwärmt. Nach Erreichen der Temperatur von 120 °C wurde das Reaktionsgemisch bei 500 U/min mit einem Gaseintragsrühren 24 h bei 175 °C gerührt. Nach Abkühlen auf 25 °C wurde der Überdruck abgelassen und 20 ml Methanol unter Rühren in den Reaktor gegeben. Vom erhaltenen Gemisch wurden flüchtige Bestandteile am Rotationsverdampfer bei 300 mbar und 40 °C abdestilliert. Als Destillationsrückstand wurden 1,37 g eines viskosen dunkelbraunen Öls erhalten. Das IR-Spektrum zeigte Übereinstimmung mit dem Ausgangsmaterial Paraformaldehyd. Es wurde keine Carbonylbande beobachtet.

Dieses Vergleichsbeispiel belegt, dass unter den in der Literatur angegebenen Bedingungen kein nichtalternierende Formaldehyd/$CO_2$-Copolymer gebildet wird.

Vergleichsbeispiel 6: Nachstellung eines Experiments gemäß Stand der Technik (Sharma, *Preprints of Symposia - American Chemical Society* **2000**,676) mit Paraformaldehyd, DABCO und 1.4-Dioxan

In einem 200 ml Reaktor aus Edelstahl wurde ein Gemisch aus 10,1 g (entsprechend 0,336 mol Formaldehyd-Äquivalenten) Paraformaldehyd (Aldrich), 2,44 g (21,8 mmol) 1,4-Diazabicyclo[2.2.2]octan (DABCO) und 26,8 ml 1,4-Dioxan eingefroren und in der Kälte mit 11,5 g (0,261 mol) Trockeneis versetzt. Der Reaktor wurde sofort verschlossen und das Reaktionsgemisch unter Rühren auf 120 °C erwärmt. Nach Erreichen der Temperatur von 120 °C wurde das Reaktionsgemisch bei 500 U/min mit einem Gaseintragsrühren 48 h bei 120 °C gerührt. Nach Abkühlen auf 25 °C wurde der Überdruck abgelassen und 20 ml Methanol unter Rühren in den Reaktor gegeben. Das resultierende Gemisch wurde über einen Papierfilter filtiert. Vom Filtrat wurden flüchtige Bestandteile am Rotationsverdampfer bei 100 mbar und 40 °C abdestilliert. Als Destillationsrückstand wurden 4,94 g eines viskosen orangefarbenen Öls erhalten. Das IR-Spektrum zeigte Übereinstimmung mit dem Ausgangsmaterial Paraformaldehyd. Es wurde keine Carbonylbande beobachtet.

Dieses Vergleichsbeispiel belegt, dass unter den in der Literatur angegebenen Bedingungen kein nichtalternierendes Formaldehyd/$CO_2$-Copolymer gebildet wird.

Gemäß den Vergleichsbeispielen 4 bis 6 führte das Nachstellen der Reaktion unter den in der Literatur beschriebenen Bedingungen zu tief braun gefärbten Produkten mit Karamelgeruch. Dies ist eine Folge unerwünschter Nebenreaktionen, insbesondere der Formose-Reaktion, die zur Bildung von Kohlenhydraten aus Formaldehyd führt. Weder die im Stand der Technik genannte Carbonyl-Bande im IR-Spektrum bei 1750 cm$^{-1}$ noch eine der in den erfindungsgemäßen Beispielen beobachteten Carbonyl-Banden im IR-Spektrum bei 1730 bis 1780 cm$^{-1}$ konnte in den Vergleichsexperimenten 4 bis 6 detektiert werden. Die Vergleichsbeispiele belegen damit, dass unter den in der Literatur angegebenen Bedingungen keine nicht-alternierenden Formaldehyd/$CO_2$-Copolymere gebildet werden.

## Patentansprüche

1.    Verfahren zur Herstellung von nicht-alternierenden Formaldehyd/$CO_2$-Copolymeren, umfassend den Schritt der Reaktion von Formaldehyd oder einer Formaldehyd freisetzenden Verbindung mit Kohlendioxid in Gegenwart eines Katalysatorsystems,
**dadurch gekennzeichnet, dass**
das Katalysatorsystem eine Lewis-saure Komponente und eine basische Komponente umfasst, wobei die Lewissaure Komponente unter Reaktionsbedingungen zumindest zeitweise koordinativ ungesättigt ist und wobei die basische Komponente einen $pK_b$-Wert von $\geq$ 0 aufweist.

2.    Verfahren gemäß Anspruch 1, wobei die Lewis-saure Komponente ein Metall ausgewählt aus der Gruppe Bor, Zinn, Zink, Kupfer, Bismuth, Molybdän, Wolfram und/oder Vanadium umfasst.

3.    Verfahren gemäß Anspruch 1 oder 2, wobei die basische Komponente ausgewählt ist aus der Gruppe Alkalicarbonate, Alkalicarboxylate, 1,4-Diazabicyclo[2.2.2]octan (DABCO), 4-(Dimethylamino)-pyridin (DMAP), 1,8-Diazabicyclo[5.4.0]undec-7-en (DBU), Triazabicyclo[4.4.0]dec-5-ene (TBD), 7-Methyl-1,5,7-triazabicyclo[4.4.0]dec-5-en (MTBD), 2,6-Lutidin, *N*-heterocyclische Carbene und/oder Trimesitylphosphin.

4.    Verfahren gemäß Anspruch 1, wobei das Katalysatorsystem in Form eines frustrierten Lewis-Paars vorliegt.

5. Verfahren gemäß einem oder mehreren der Ansprüche 1 bis 4, wobei die Lewis-saure Komponente in einem molaren Verhältnis von 1: 100000 bis 1:10 zu Formaldehyd beziehungsweise den in der Formaldehyd-Quelle enthaltenen Formaldehyd-Äquivalenten eingesetzt wird.

6. Verfahren gemäß einem oder mehreren der Ansprüche 1 bis 5, wobei die basische Komponente in einem molaren Verhältnis von 1:100000 bis 1:1 zu Formaldehyd beziehungsweise den in der Formaldehyd-Quelle enthaltenen Formaldehyd-Äquivalenten eingesetzt wird.

7. Verfahren gemäß einem oder mehreren der Ansprüche 1 bis 6, wobei das molare Verhältnis von Lewis-saurer Komponente zu basischer Komponente 1:2000 bis 10:1 beträgt.

8. Verfahren gemäß einem oder mehreren der Ansprüche 1 bis 7, wobei das resultierende nichtalternierende Formaldehyd/$CO_2$-Copolymer durch Zugabe von Epoxiden stabilisiert wird.

9. Verfahren gemäß einem oder mehreren der Ansprüche 1 bis 7, wobei das resultierende nichtalternierende Formaldehyd/$CO_2$-Copolymer durch Zugabe von zyklischen Acetalen stabilisiert wird.

10. Verfahren gemäß einem oder mehreren der Ansprüche 1 bis 7, wobei das resultierende nichtalternierende Formaldehyd/$CO_2$-Copolymer durch Zugabe von Carbonsäureanhydriden stabilisiert wird.

11. Verfahren gemäß einem oder mehreren der Ansprüche 1 bis 7, wobei das resultierende nichtalternierende Formaldehyd/$CO_2$-Copolymer durch Zugabe von organischen Carbonaten stabilisiert wird.

12. Verfahren gemäß einem oder mehreren der Ansprüche 1 bis 7, wobei das resultierende nichtalternierende Formaldehyd/$CO_2$-Copolymer durch Zugabe von organischen Isocyanaten stabilisiert wird.

13. Nicht-alternierendes Formaldehyd/$CO_2$-Copolymer, erhältlich durch ein Verfahren gemäß einem oder mehreren der Ansprüche 1 bis 12, mit einem molaren Verhältnis von Formaldehyd- zu $CO_2$-Einheiten zwischen >1:1 und 30:1.

14. Copolymer gemäß Anspruch 14 mit einem zahlenmittleren Molekulargewicht von 400 bis 5000 g/mol.

15. Copolymer gemäß Anspruch 13 oder 14 mit durchschnittlich 1 bis 50 OH-Gruppen pro Polymerkette.

## Claims

1. Process for preparing nonalternating formaldehyde/$CO_2$ copolymers, comprising the step of reacting formaldehyde or a formaldehyde-releasing compound with carbon dioxide in the presence of a catalyst system,
**characterized in that**
the catalyst system comprises a Lewis-acidic component and a basic component,
wherein the Lewis-acidic component under reaction conditions is at least intermittently coordinatively unsaturated and wherein the basic component has a $pK_b$ of $\geq 0$.

2. Process according to Claim 1, wherein the Lewis-acidic component comprises a metal selected from the group of boron, tin, zinc, copper, bismuth, molybdenum, tungsten and/or vanadium.

3. Process according to Claim 1 or 2, wherein the basic component is selected from the group of alkali metal carbonates, alkali metal carboxylates, 1,4-diazabicyclo[2.2.2]octane (DABCO), 4-(dimethylamino)pyridine (DMAP), 1,8-diazabicyclo[5.4.0]undec-7-ene (DBU), triazabicyclo[4.4.0]dec-5-ene (TBD), 7-methyl-1,5,7-triazabicyclo[4.4.0]dec-5-ene (MTBD), 2,6-lutidine, N-heterocyclic carbenes and/or trimesitylphosphine.

4. Process according to Claim 1, wherein the catalyst system takes the form of a frustrated Lewis pair.

5. Process according to one or more of Claims 1 to 4, wherein the Lewis-acidic component is used in a molar ratio of 1:100 000 to 1:10 relative to formaldehyde or the formaldehyde equivalents present in the formaldehyde source.

6. Process according to one or more of Claims 1 to 5, wherein the basic component is used in a molar ratio of 1:100 000 to 1:1 relative to formaldehyde or the formaldehyde equivalents present in the formaldehyde source.

**7.** Process according to one or more of Claims 1 to 6, wherein the molar ratio of Lewis-acidic component to basic component is 1:2000 to 10:1.

**8.** Process according to one or more of Claims 1 to 7, wherein the resulting nonalternating formaldehyde/$CO_2$ copolymer is stabilized by addition of epoxides.

**9.** Process according to one or more of Claims 1 to 7, wherein the resulting nonalternating formaldehyde/$CO_2$ copolymer is stabilized by addition of cyclic acetals.

**10.** Process according to one or more of Claims 1 to 7, wherein the resulting nonalternating formaldehyde/$CO_2$ copolymer is stabilized by addition of carboxylic anhydrides.

**11.** Process according to one or more of Claims 1 to 7, wherein the resulting nonalternating formaldehyde/$CO_2$ copolymer is stabilized by addition of organic carbonates.

**12.** Process according to one or more of Claims 1 to 7, wherein the resulting nonalternating formaldehyde/$CO_2$ copolymer is stabilized by addition of organic isocyanates.

**13.** Nonalternating formaldehyde/$CO_2$ copolymer obtainable by a process according to one or more of Claims 1 to 12, having a molar ratio of formaldehyde units to $CO_2$ units between >1:1 and 30:1.

**14.** Copolymer according to Claim 14 having a number-average molecular weight of 400 to 5000 g/mol.

**15.** Copolymer according to Claim 13 or 14 having an average of 1 to 50 OH groups per polymer chain.

**Revendications**

**1.** Procédé pour la préparation de copolymères de formaldéhyde/$CO_2$ non séquencés, comprenant l'étape de réaction de formaldéhyde ou d'un composé libérant du formaldéhyde avec du dioxyde de carbone en présence d'un système catalytique, **caractérisé en ce que** le système catalytique comprend un composant de type acide de Lewis et un composant basique, le composant de type acide de Lewis étant au moins temporairement insaturé d'un point de vue coordination dans les conditions de réaction et le composant basique présentant une valeur $pK_b \geq 0$.

**2.** Procédé selon la revendication 1, le composant de type acide de Lewis comprenant un métal choisi dans le groupe formé par le bore, l'étain, le zinc, le cuivre, le bismuth, le molybdène, le tungstène et/ou le vanadium.

**3.** Procédé selon la revendication 1 ou 2, le composant basique étant choisi dans le groupe formé par les carbonates de métal alcalin, les carboxylates de métal alcalin, le 1,4-diazabicyclo[2,2,2]octane (DABCO), la 4-(diméthylamino)-pyridine (DMAP), le 1,8-diazabicyclo[5,4,0]undéc-7-ène (DBU), les triazabicyclo[4.4.0]déc-5-ènes (TBD), le 7-méthyl-1,5,7-triazabicyclo[4.4.0]déc-5-ène (MTBD), la 2,6-lutidine, les carbènes N-hétérocycliques et/ou la trimésitylphosphine.

**4.** Procédé selon la revendication 1, le système catalytique se trouvant sous forme d'une paire de Lewis frustrée.

**5.** Procédé selon l'une ou plusieurs des revendications 1 à 4, le composant de type acide de Lewis étant utilisé dans un rapport molaire de 1:100000 à 1:10 par rapport au formaldéhyde ou par rapport aux équivalents de formaldéhyde contenus dans la source de formaldéhyde.

**6.** Procédé selon l'une ou plusieurs des revendications 1 à 5, le composant basique étant utilisé dans un rapport molaire de 1:100.000 à 1:1 par rapport au formaldéhyde ou par rapport aux équivalents de formaldéhyde contenus dans la source de formaldéhyde.

**7.** Procédé selon l'une ou plusieurs des revendications 1 à 6, le rapport molaire du composant de type acide de Lewis au composant basique étant de 1:2000 à 10:1.

**8.** Procédé selon l'une ou plusieurs des revendications 1 à 7, le copolymère de formaldéhyde/$CO_2$ non séquencé résultant étant stabilisé par addition d'époxydes.

9. Procédé selon l'une ou plusieurs des revendications 1 à 7, le copolymère de formaldéhyde/$CO_2$ non séquencé résultant étant stabilisé par addition d'acétals cycliques.

10. Procédé selon l'une ou plusieurs des revendications 1 à 7, le copolymère de formaldéhyde/$CO_2$ non séquencé résultant étant stabilisé par addition d'anhydrides d'acide carboxylique.

11. Procédé selon l'une ou plusieurs des revendications 1 à 7, le copolymère de formaldéhyde/$CO_2$ non séquencé résultant étant stabilisé par addition de carbonates organiques.

12. Procédé selon l'une ou plusieurs des revendications 1 à 7, le copolymère de formaldéhyde/$CO_2$ non séquencé résultant étant stabilisé par addition d'isocyanates organiques.

13. Copolymère de formaldéhyde/$CO_2$ non séquencé pouvant être obtenu par un procédé selon l'une ou plusieurs des revendications 1 à 12, présentant un rapport molaire des unités de formaldéhyde aux unités de $CO_2$ entre > 1:1 et 30:1.

14. Copolymère selon la revendication 14, présentant un poids moléculaire numérique moyen de 400 à 5000 g/mole.

15. Copolymère selon la revendication 13 ou 14 présentant en moyenne 1 à 50 groupes OH par chaîne polymère.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9606118 A

**In der Beschreibung aufgeführte Nicht-Patentliteratur**

- **CHIANG.** *Tatung Xuebao,* 1978, vol. 8, 255-265
- Preprints of Symposia. American Chemical Society, 2000, vol. 45-4, 676
- *Angew. Chem. Int. Ed.,* 2010, vol. 49, 46
- *Dalton Trans.,* 2011, vol. 40, 7475
- *Angew. Chem. Int. Ed.,* 2011, vol. 50, 10294